# EUROPÄISCHE PATENTSCHRIFT

(11) **EP 3 078 158 B1**
(45) Veröffentlichungstag und Bekanntmachung des Hinweises auf die Patenterteilung: **17.07.2019**
(21) Anmeldenummer: 14815263.0
(22) Anmeldetag: 28.11.2014
(51) Int. Cl.: H04L 9/32, H04L 29/06, G06Q 20/38, G06Q 20/40

(54) **AUTHENTIFIZIERUNGS- UND/ODER IDENTIFIKATIONSVERFAHREN IN EINEM KOMMUNIKATIONSNETZWERK**
AUTHENTICATION AND/OR IDENTIFICATION METHOD IN A COMMUNICATION NETWORK
PROCÉDÉ D'AUTHENTIFICATION ET/OU D'IDENTIFICATION DANS UN RÉSEAU DE COMMUNICATION

(30) Priorität: 28.11.2013 DE 102013019870
(43) Veröffentlichungstag der Anmeldung: 12.10.2016
(73) Patentinhaber: Kisters, Friedrich, 8280 Kreuzlingen (CH)
(72) Erfinder: Kisters, Friedrich, 8280 Kreuzlingen (CH)
(74) Vertreter: Patentanwälte Dr. Keller, Schwertfeger Partnerschaft mbB
(86) Internationale Anmeldenummer: PCT/EP2014/076016
(87) Internationale Veröffentlichungsnummer: WO 2015/079045

(56) Entgegenhaltungen:
- GB-A- 2 387 999
- US-A- 5 060 263
- US-A1- 2013 054 474

## Beschreibung

### Technisches Gebiet:

Die vorliegende Erfindung betrifft ein Verfahren zur Authentifizierung und/oder Identifikation eines Gerätes, eines Dienstes, einer Person und/oder eines Geldmittels in einem Kommunikationsnetzwerk, bestehend aus einer Kommunikationseinrichtung und einer zentralen Datenbank, zwischen denen eine Authentifizierungsabfrage durchgeführt wird.

### Stand der Technik:

Verschiedene Sicherheitsverfahren zur Durchführung eines Datenaustausches in einem Netzwerk zwischen unterschiedlichen Netzwerkteilnehmern sind bekannt. So beschreibt beispielsweise die WO 2013/116019 A1 ein Sicherheitsverfahren, bei dem ein sogenannter dynamischer Sicherheitscode kryptografisch eine mobile Kommunikationseinrichtung eines Benutzers in einem Netzwerk identifiziert. Die Dynamik des Codes besteht dabei im Austausch des Sicherheitselementes nach jeder erfolgten Authentifizierung. Bei diesem Verfahren handelt sich also um dynamisch aufeinanderfolgende statische Sicherheitscodes. Die Codes an sich bleiben statisch und werden nicht fortlaufend verändert, sondern insgesamt ersetzt, also neu berechnet und herausgegeben. Dabei werden unterschiedliche Sicherheitsabfragen zwischen dem Dienstleistungsanbieter und dem Benutzer bzw. dessen Gerät durchgeführt.

Die US 2007/0260544 A1 beschreibt ein Verfahren und ein System zur dynamischen Authentifizierung anstelle einer statischen PIN der sich vor jeder neuen Transaktion verändert. Auf diese Weise soll eine Transaktion über ein Transaktionsnetzwerk autorisiert werden. Es handelt sich also auch hier um dynamisch aufeinanderfolgende statische Sicherheitscodes, welche sich nur im Falle einer Transaktion ändern und einen einmaligen Gebrauch zulassen.

Die EP 1 804 418 A1 beschreibt ein Verfahren, das ein dynamisches Passwort verwendet, in dem ein Schlüssel eingesetzt wird, der über einen Algorithmus generiert wird. Dabei wird ein Initialisierungsparameter in einer Kommunikationsspeicherkarte hinterlegt. Auch hier wird der dynamische Code als ein einmalig einsetzbarer Code, der für jede Authentifizierung dynamisch generiert wird, beschrieben. Der Code selbst verändert sich dabei nicht, sondern wird jeweils neu berechnet und ersetzt. Er ist demzufolge zwar dynamisch generiert, aber ansonsten statisch, da er durch die Neuberechnung keinen Veränderungsprozess durchläuft.

Die US 7,106,845 B1 beschreibt ein Sicherheitssystem mit unterschiedlichen Sicherheitsstufen, die benutzerspezifisch wählbar sind. Eine Stufe kann hierbei einen Algorithmus einsetzen, der bestimmte Werte verändert, wobei der Algorithmus den Benutzern bekannt ist. Beispielsweise kann der Algorithmus aus einer Zeichenfolge bestehen, die beispielsweise die Uhrzeit oder das Datum umfasst. Ein zeitabhängiger Code würde sich dabei in gleicher Weise verändern. Eine weitere Sicherheitsstufe sendet einen zufälligen Teil an den Benutzer (beispielsweise über ein Mobiltelefon). Dabei ist ein Benutzerprofil in einer Datenbank hinterlegt. Der dynamische Code wird bei diesem Verfahren über dynamische Faktoren bei der Authentifikation berechnet, ist danach aber statisch und deshalb nur einmal einsetzbar. Auch hier wird der Code zwar dynamisch generiert, verbleibt jedoch anschließend statisch, da er nach seiner Generierung keinen Veränderungsprozess mehr durchläuft, sondern jeweils neu generiert werden muss.

Daneben gibt es Verfahren für die Erzeugung eines "digitalen Geldmittels" oder einer digitalen Banknote, die zur Bezahlung eingesetzt werden kann. Ein solches Verfahren ist beispielsweise in der WO 2013/131560 beschrieben, bei der zunächst physikalische und/oder nummerische Parameter einer existierenden Banknote gesammelt und anschließend über Algorithmen in elektronischer Form überführt werden.

Daneben beschreibt die WO 2013/1244991 A1 ein Verfahren um Transaktionen mit digitalen Banknoten durchzuführen, wobei das Verfahren eine Identifikation, eine Validierung und Autorisierung für die digitale Banknote vorsieht.

Viele bekannte Sicherheitsverfahren sehen starre Sicherheitsanfragen vor, wie beispielsweise die Abfrage von Passwörtern oder PIN-Nummern. Daneben gibt es Verfahren, die mit einem dynamischen Code arbeiten, der sich periodisch oder gemäß einem Algorithmus ändert, wobei nur dessen Generierung dynamisch ist. Nach der dynamischen Generierung bleibt der Code statisch und kann deshalb nur einmal angewendet werden. Er wird somit bei jeder weiteren Authentifikation wieder neu berechnet. Solche Verfahren sind von einem Angreifer überwindbar, wenn er widerrechtlich Zugriff auf die entsprechende Datenbank oder den Algorithmus erhält. Biometrische Merkmale werden deshalb häufig zur Identifizierung herangezogen, sind allerdings anfällig für Fälschungen und Kopien.

So beschreibt die EP 0 996 928 D1 ein Authentifizierungsverfahren, bei dem der Code aus einem zufälligen Teil und einem nicht zufälligen Teil (z. B. Identifikationsnummer) besteht. Dabei sind sowohl der zufällige Teil als auch der nicht zufällige Teil des Codes statisch, d. h. der Code verändert sich an sich nicht statisch weiter. Die Verwendung eines Zufallscodes soll die Sicherheit erhöhen. Ein ähnliches Verfahren beschreibt auch die US 4,998,279 A, welche einen statischen Code beschreibt, der aus dynamischen Variablen besteht (z. B. ein Datum oder Zeit). Eine dynamische Veränderung dieser Variablen, die nicht vorhersehbar ist, wird in dieser Druckschrift nicht gezeigt.

Die DE 10 2011 101 711 A1 beschreibt ein Verfahren zur Authentifikation, bei dem eine statische Komponente und eine dynamische Komponente vorgesehen sind. Zur Bildung der dynamischen Komponente ist eine Bildungsregel vorgesehen. In einem Verfahrensschritt wird eine Authentifikationskennung erzeugt, indem die Authentifizierungsinformationen der statischen Komponente, die Bildungsregel zur Ermittlung der dynamischen Komponente sowie eine Zustandsgröße in Form eines Zustandswertes verarbeitet werden. Bei der Zustandsgröße kann es sich beispielsweise um die Uhrzeit handeln. Auch hier findet sich kein individueller lokaler Parameter zur Bildung einer dynamischen, nicht vorhersehbaren Komponente.

In der DE 10 2011 085 538 A1 wird ein Verfahren beschrieben, bei dem eine Zeichenfolge einen vordefinierten Zeichensatz aufweist. Mit Zufallsgeneratormitteln erfolgt die Auswahl zumindest eines Zeichens aus dem vordefinierten Zeichensatz, um dieses Zeichen zu ersetzen. Dabei können mehrere Zeichen aus dem vordefinierten Zeichensatz von dem Zufallsgenerator ausgewählt werden. Anschließend werden das ausgewählte Zeichen oder die Zeichen auf einer Anzeigevorrichtung angezeigt. In einem weiteren Schritt erfolgt der Empfang einer dritten Zeichenfolge. Schließlich wird überprüft, ob die dritte Zeichenfolge mit der zweiten Zeichenfolge übereinstimmt.

In der US 6,636,973 B1 wird ein Verfahren beschrieben, bei dem bei der Identifizierung in einem Computernetzwerk ein dynamisch veränderbares Benutzerpasswort verwendet wird. Zunächst wird hierfür ein biometrisches Merkmal des Benutzers erfasst und in einen Code umgewandelt. Dieser Code wird einem Benutzerpasswort zugeordnet, welches beim Anmelden in dem Netzwerk verändert wird. Das neu kreierte Passwort wird in einer Benutzerdatenbank hinterlegt. Die dynamische Veränderung tritt somit ein, sobald sich der Benutzer in das Netzwerk einloggt. Ein Übermitteln des dynamisch veränderten Codes und eine Gegenprüfung ist nicht vorgesehen.

Weitere Ansätze aus der Stand der Technik sind im Dokument GB 2 387 999 A beschrieben.

Diese Verfahren bieten keine ausreichende Sicherheit, wenn ein Angreifer Zugriff auf eine lokale oder zentrale Kommunikationseinrichtung wie z.B. einen Server für die Durchführung von Diensten, beispielsweise Finanztransaktionen, missbraucht. Ein Sicherheitssystem, dass bezüglich unberechtigter Zugriffe auf die zentrale oder lokale Datenbank unempfindlich ist und bei einer Person, einem Gerät, aber auch abstrakt für die Autorisierung von Diensten oder Geldmitteln herangezogen werden kann, wäre wünschenswert.

### Darstellung der Erfindung:

Vor diesem Hintergrund ist es Aufgabe der vorliegenden Erfindung ein verbessertes Verfahren zur Authentifizierung und/oder Identifikation eines Gerätes, eines Dienstes, einer Person und/oder eines Geldmittels in einem Kommunikationsnetzwerk bereit zu stellen, bei dem die Überprüfung auf der Verwendung nicht vorhersehbarer dynamischen Komponenten basiert.

Diese Aufgabe wird gelöst durch eines der hier erfindungsgemäß beschriebenen Verfahren.

Die erfindungsgemäßen Verfahren eignen sich zur Authentifizierung und/oder Identifikation eines Gerätes, eines Dienstes, einer Person und/oder eines Geldmittels. Generell lassen sich also konkrete Gegenstände, Personen, Dienste eines Internetanbieters (z.B. Finanzdienstleistungen, Internettransaktionen, Medienangebote) oder Geldmittel von dem erfindungsgemäßen Verfahren erfassen. Dabei geht man von einem Kommunikationsnetzwerk aus (z.B. ein öffentliches drahtgebundenes oder drahtloses Netzwerk, beispielsweise das Internet oder ein internes Netzwerk bzw. Intranet), das aus einem oder mehreren Teilnehmern besteht. Dabei gibt es lokale Teilnehmer und/oder eine zentrale Datenbank, in der Informationen zu dem Gerät, dem Dienst, der Person und/oder dem Geldmittel der Teilnehmer hinterlegt sind. Das Verfahren funktioniert jedoch auch unter den Teilnehmern, wobei die "zentrale Datenbank" einem oder mehreren Teilnehmer/n entspricht. Das erfindungsgemäße Verfahren ermöglicht die Authentifizierung und/oder Identifikation eines Teilnehmers, dessen Gerätes und kann auch ein Zahlungsmittel oder einen Dienst, den der Teilnehmer nutzen möchte, identifizieren oder zur Nutzung authentifizieren. Der Begriff "zentrale Datenbank" soll im Zusammenhang der vorliegenden Erfindung breit ausgelegt werden und sich nicht nur auf die Datenbank einer Datenverarbeitungsanlage beziehen. Der Begriff umfasst beispielsweise eine Datenverarbeitungsanlage, einen hardwarebasierten Server oder auch eine weitere stationäre, mobile oder portable Kommunikationseinrichtung.

Um beispielsweise einen bestimmten Dienst eines Dienstleistungsanbieters nutzen zu können, muss zunächst die Person und/oder das Gerät identifiziert werden, damit der Benutzer bzw. dessen Gerät auf den Dienst zugreifen kann. Daran gekoppelt kann beispielsweise auch ein Bezahlsystem hängen, das es dem Benutzer ermöglicht, den in Anspruch genommen Dienst sicher und bargeldlos zu bezahlen. Dies kann beispielsweise über einen intern im Gerät verschlüsselten Guthabenbetrag oder einen intern hinterlegten "digitalen Geldschein" erfolgen, der nach einer erfolgten Transaktion vollständig oder teilweise gelöscht oder ungültig gemacht wird, oder neu zugeordnet wird.

Als sicherheitsrelevantes Element werden bei dem erfindungsgemäßen Verfahren neuartige "Schlüssel" eingesetzt, die jedem Netzwerkteilnehmer und/oder einer oder mehreren zentralen Datenbank(en) zugeordnet werden. Die "Schlüssel" bestehen aus Zeichenfolgen oder Zeichen, die entweder veränderbar oder statisch sein können, wobei der eine Partner die genauen Zustände der dynamischen Zeichen oder Zeichenfolgen des anderen entweder nicht oder nur teilweise kennt. Eine Zeichenfolge ist aus mehreren Zeichen aufgebaut, wobei die Zeichen vorzugsweise seriell oder verzweigt zueinander angeordnet sein können. Ferner können auch mehrere Zeichenfolgen miteinander vernetzt sein, wobei eine zuvor festgelegte Anordnung der Zeichenfolgen im Schlüssel neben der Veränderbarkeit einzelner Zeichen oder ganzer Zeichenfolgen ein eigenes Sicherheitsmerkmal darstellen können.

Ein erfindungsgemäß aufgebauter Schlüssel kann temporär in einer zentralen Datenbank hinterlegt sein, um die Teilnehmer in dem Kommunikationsnetzwerk bzw. deren Geräte zu identifizieren und für die Inanspruchnahme von Diensten zu autorisieren. Die einzelnen Schlüssel bestehen aus wenigstens einer Zahlenfolge, bestehend aus wenigstens 5, 10, 20, 50, 70, 100, 200 oder mehr Zeichen. Vorzugsweise können auch mehrere Zeichenfolgen mit veränderbaren und/oder unveränderbaren Zeichen vorgesehen sein. Die Schlüssel können dabei Personen-, Dienst-, Geräte-spezifische Informationen oder Parameter enthalten, beispielsweise die Identifikationsnummer eines Benutzers, die Netzwerknummer eines Gerätes, ein Datum, physikalische Parameter, ein Geldwert oder auch Quersummen oder Prüfsummen dieser Parameter, die eine eindeutige Identifizierung oder Zuordnung der Person oder des Gerätes im Kommunikationsnetzwerk ermöglicht.

Die Erfindung basiert im Wesentlichen auf zwei Datenbanken, die der Unterscheidbarkeit halber als lokale und zentrale Datenbank bezeichnet werden. Die lokale Datenbank ist beispielsweise in einer Kommunikationseinrichtung, wie z.B. einem tragbaren PC, einem Tablet oder einem Smartphone hinterlegt. Der Begriff "lokal" bezeichnet beispielsweise eine mobile oder portable Kommunikationseinrichtung, der Begriff "zentral" eine Datenverarbeitungseinrichtung (Server) oder eine weitere mobile oder portable Kommunikationseinrichtung. Die Begriffe "lokal" oder "zentral" dienen demnach lediglich der Differenzierung/Unterscheidung.

Eine Besonderheit der vorliegenden Erfindung liegt nun darin, dass sowohl in der Kommunikationseinrichtung als auch in der zentralen Datenbank wenigstens ein Schlüssel hinterlegt ist, der aus wenigstens einer Zeichenfolge zusammengesetzt ist und jede Zeichenfolge in dem jeweiligen Schlüssel aus veränderbaren und/oder unveränderbaren Zeichen besteht, wobei die Veränderung der Zeichen entweder lokal, zentral und/oder an beiden Orten erfolgt. Dabei kann es vorzugsweise vorgesehen sein, dass sich die veränderbaren Zeichen nur lokal, nur zentral oder an beiden Orten ändern dürfen, während die unveränderbaren Zeichen beispielsweise nur in der zentralen Datenbank, nicht jedoch in der Kommunikationseinrichtung veränderbar sind. Die Begriffe "veränderbar" oder "unveränderbar" sind daher immer unter dem Gesichtspunkt der jeweiligen Datenbank und des Authentifizierungszeitpunktes zu sehen. Bestimmte Zeichen bleiben während bzw. zwischen zwei Authentifizierungszeitpunkten unveränderbar, werden jedoch bei einer Authentifizierung wieder verändert, beispielsweise durch andere Zeichen ersetzt oder in den ursprünglichen Zustand zurückversetzt.

In einer bevorzugten Ausführungsform sind die veränderbaren Zeichen dynamisch veränderbar, d.h. entweder lokal dynamisch veränderbar oder zentral dynamisch veränderbar. Bei lokal dynamisch veränderbaren Zeichen "weiß" die zentrale Datenbank nicht, auf welcher Grundlage diese Änderungen beruhen. Umgekehrt sind dynamische zentrale Veränderungen der lokalen Datenbank in der Kommunikationseinrichtung, beispielsweise einem Mobiltelefon oder Smartphone, nicht bekannt.

Dynamische Veränderungen, die z.B. lokal auf der Kommunikationseinrichtung laufen sind von der zentralen Datenbank nicht vorhersehbar und können daher von einem Hacker auch nicht geknackt werden. Umgekehrt sind dynamische Veränderungen der zentralen Datenbank nur dieser bekannt, da die entsprechenden Regeln oder Anweisungen nicht in der lokalen Kommunikationseinrichtung hinterlegt sind. Daneben gibt es statische Zeichen, also Zeichen, die sich zwischen zwei Authentifizierungszeitpunkten nicht verändern und nur bei einer Authentifizierungsabfrage verändern können (aber nicht müssen, beispielsweise durch ein Zurücksetzen in den ursprünglichen Zustand oder Ersetzen mit einem neu generierten Zeichen). Das neu generierte Zeichen kann dabei vorzugsweise von der dynamisch veränderbaren Zeichenfolge stammen. Zahlen der veränderbaren Zeichenfolge wären dann indirekt Teil der statischen Zeichenfolge. Beispielsweise kann vorgesehen sein, dass die zentrale Datenbank dynamisch veränderbare Zeichen enthält, die sich fortlaufend aufgrund nur lokal vorhandener, nicht vorausberechenbarer Faktoren ändern (ohne dass diese Änderungen der Kommunikationseinrichtung bekannt sind). Bei einer Authentifizierung könnten zusätzlich bestimmte Zeichen (z.B. beliebig oder z.B. ein Datum oder eine Uhrzeit) als Grundlage für die statische Zeichen dienen, die bei der Abfrage von der zentralen Datenbank an die Kommunikationseinrichtung übermittelt werden. Zusätzlich können identitätsbestimmende Zeichen (= unique ID), ein Passwort oder ein Code Teil der Zeichenfolge sein, die sich nicht verändert.

Bei den veränderbaren Zeichen unterscheidet man demnach nach dynamisch veränderbaren Zeichen, die sich entweder lokal oder zentral verändern und Zeichen, die sich nur bei einer Authentifizierungsabfrage ändern, sowie gegebenenfalls Zeichen, die sich nie ändern. Die unveränderbaren Zeichen sind Zeichen, die mindestens zwischen zwei Authentifizierungsabfragen statisch bzw. konserviert bleiben.

Dabei können ganze Zeichenfolgen oder auch einzelne Zeichen innerhalb einer Zeichenfolge verändert werden, wobei die veränderbaren Zeichen oder die veränderbare Zeichenfolge dem jeweiligen anderen Kommunikationsteilnehmer nicht bekannt sind. Umgekehrt sind die unveränderbaren Zeichen dem anderen Kommunikationsteilnehmer nicht unbedingt bekannt. Gibt es beispielsweise Zeichen, die sich nur lokal in der Kommunikationseinrichtung verändern, erkennt die zentrale Datenbank nicht, welche Zeichen sich in der Kommunikationseinrichtung lokal verändern und auf welchen Einflüssen diese Veränderung basiert. Sie erkennt zudem nicht, wie sich die Veränderungen zusammensetzen und was die Auslöser dieser Veränderungen sind. Die entsprechenden Regeln, welche die Art und den Umfang der Veränderungen in der Zeichenfolge festlegen, wären in diesem Fall nur der Kommunikationseinrichtung, nicht jedoch der zentralen Datenbank bekannt. Je nach Anwendungsfall kann dies natürlich auch für den umgekehrten Fall gelten, d.h. die Veränderungen von zentral veränderbaren Zeichen oder einer ganzen Zeichenfolge der zentralen Datenbank sind nur dieser bekannt, nicht jedoch der Kommunikationseinrichtung. Da diese Veränderungen nach jeder Authentifizierung in der jeweils anderen Datenbank als neuer Zustand gespeichert werden, ist es zum einen nicht möglich, sich mit einer zuvor erfolgten Kopie anzumelden, die noch den vorherigen Stand wiedergibt, zum anderen ist es nicht möglich, den neuen Stand auf der sich verändernden Datenbank zu kopieren, da er nicht statisch bleibt, sondern sich kontinuierlich weiterverändert. Eine missbräuchliche Verwendung wird deshalb spätestens beim nächsten Einsatz der korrekten Zeichenfolge entdeckt, sollte dieser Einsatz bereits erfolgt sein, dann wird der missbräuchliche Einsatz sofort entdeckt.

Die einzelnen oder mehrere lokal veränderbare Zeichen ändern sich erfindungsgemäß in Abhängigkeit einer messbaren Größe, beispielsweise einer physikalischen oder chemisch ermittelbaren Größe. Hierfür werden vorzugsweise Sensoren oder Messeinrichtungen eingesetzt, die eine Zustandsgröße in oder außerhalb der Kommunikationseinrichtung ermitteln. Ein Beispiel ist die Messung der Prozessortemperatur im inneren oder die Außentemperatur. Anhand der ermittelten Messgröße können in einem weiteren Schritt die veränderbaren Zeichen oder Zeichenfolge in nicht vorhersehbarer Weise verändert werden. Die Bestimmung eines Messwertes liefert somit einen bestimmten Zahlenwert, der zur dynamischen Veränderung des Sicherheitscodes herangezogen wird. Ferner ist es auch möglich, dass die ermittelte Messgröße Einfluss auf einen bereits vorhandenen Algorithmus, eine Regel und/oder eine Anweisung nimmt, entweder in der Kommunikationseinrichtung oder in der zentralen Datenbank. Denkbar sind beispielsweise externe oder interne Einflüsse, die zu der Änderung des dynamischen Codes führen. Externe oder interne Einflüsse basieren vorzugsweise auf physikalischen oder chemischen Eigenschaften oder Prozessen. Ein interner Einfluss umfasst beispielsweise den Batteriestand, die Prozessortemperatur, einen Zeitgeber, den Zeitpunkt der letzten Authentifizierung/en, eine Differenz zwischen zwei Zeitwerten, einen Impuls oder einen parameterabhängigen Algorithmus, eine spezielle Konfiguration (z.B. Version eines Betriebssystems, geladene mobile Softwarepakete (APPs), benutzte Apps oder offene Anwendungen). Daneben können die Einflüsse auch eine individuelle Modifikation (z.B. eine zusätzliche SD Karte, ein RAM-Upgrade) oder anwendungsspezifische bzw. anwenderabhängige Merkmale (z.B. typische Prozessorauslastung, Betriebstemperatur) umfassen. Ein externer Einfluss umfasst beispielsweise eine lokale, äußere Temperaturänderung, eine Druckänderung, die Anzahl oder Impulsstärke von Erschütterungen, eine Positionsänderung eines sich bewegenden Teilnehmers, typische Verhaltens- oder Bedienungsmerkmale eines Nutzers (z.B. Anzahl paralleler Kontakte mit anderen Benutzern, Kontakte pro Zeitraum, welche Kontakte = Kontaktgruppe, wobei diese sich je nach Tageszeit signifikant ändern kann), Häufigkeit der Nutzung, ebenfalls in Abhängigkeit von der Uhrzeit/eines Zeitraumes, Sprechlautstärke, andere Vorlieben, wie bevorzugte Musik, bevorzugte APPs, bevorzugte Worte und Wortkürzel. Eine Regel umfasst beispielsweise die Anwendung einer Grundrechenregel, Herunterzählen oder Heraufzählen eines Wertes oder einer Zahl, eines allgemeinen Algorithmus oder auch das Pendeln innerhalb von Grenzwerten und das Verschieben der Zahlenposition. Eine Anweisung umfasst beispielsweise eine Vergrößerung oder Verminderung eines Guthabenbetrages um einen bestimmten Wert, das Aufbrauchen eines Guthabenbetrags, eine festgelegte Änderung einer Zahlenfolge oder die Zuordnung eines Wertes. Beispielsweise kann die Zeichenfolge einen Geldbetrag umfassen, der vollständig als Bezahlungsmittel verbraucht wird, wobei die Zahlenfolge nach der Transaktion teilweise oder ganz entwertet ist.

Das erfindungsgemäße Verfahren erfordert in einer Variante einen stationären Server und eine mobile Kommunikationseinrichtung, beispielsweise einen Computer, ein Notebook, ein Mobiltelefon, ein Tablet oder ein Smartphone, und eine zentrale Datenbank, wobei zwischen der Kommunikationseinrichtung und der zentralen Datenbank eine Authentifizierungsabfrage durchgeführt wird. In der Regel wird sich die zentrale Datenbank auf einem stationären Serversystem befinden. Jedoch ist auch die Ablage in einer anderen Kommunikationseinrichtung oder einem Server (stationär oder mobil) möglich. Im Rahmen der Authentifizierungsabfrage wird das Gerät, der Dienst, die Person und/oder das Geldmittel authentifiziert und/oder identifiziert.

In einem ersten Schritt wird zunächst ein erster Schlüssel in der Kommunikationseinrichtung bereitgestellt, der wenigstens eine lokal hinterlegte Zeichenfolge umfasst. Der Ausdruck "lokal" bezeichnet hierbei die Hinterlegung in der Kommunikationseinrichtung, der Ausdruck "zentral" die Hinterlegung in einer nicht lokalen Datenbank. Die in der Kommunikationseinrichtung lokal hinterlegte Zeichenfolge besteht vorzugsweise aus einzelnen oder mehreren lokal veränderbaren Zeichen, die sich in Abhängigkeit einer physikalischen Größe, d.h. eines internen oder externen Einflusses, eines von einer Messgröße abhängigen Algorithmus, Regel und/oder Anweisung in der Kommunikationseinrichtung zwischen zwei Authentifizierungszeitpunkten dynamisch verändern. Diese dynamische, fortschreitende Veränderung findet bei einer Ausführungsform lediglich bei den Zeichen oder der Zeichenfolge der Kommunikationseinrichtung statt. Die zentrale Datenbank "kennt" diese Änderungen in den Zeichen oder der Zeichenfolge der Kommunikationseinrichtung nicht. Die zentrale Datenbank kennt also auch nicht die diesen Veränderungen zugrunde liegende Regel oder Einflüsse.

Die dynamische Veränderbarkeit umfasst den Austausch, das Löschen, die Ergänzung oder sonstige Änderungen einzelner oder mehrerer Zeichen oder ganzer Zahlenfolgen. Vorzugsweise können sich beispielsweise veränderbare Zeichen in einer Zeichenfolge unterschiedlich schnell verändern. Beispielsweise kann eine Regel vorsehen, dass sich ein Zahlenwert entweder nach oben oder nach unten gemäß einem Zeittakt verändert. Bei anderen Zeichen in der Zeichenfolge können schnellere Veränderungen in einem anderen Zeittakt vorgesehen sein, beispielsweise ein sekundenschnelles Hochzählen oder Herunterzählen zuvor festgelegter Zeichen oder Zeichenfolgen. Diese Verzögerung oder Beschleunigung des Zeittaktes der dynamischen Veränderung (z.B. Zeitfolge, Häufigkeit der Veränderung, Intervall) kann zudem erneut von nur lokal vorkommenden physischen oder chemischen Parametern beeinflusst werden, welche ebenfalls Teil der lokal hinterlegten dynamischen Zeichenfolge sein können und damit eine Wechselbeziehung zum Veränderungsvermögen anderer dynamischer Zeichen aufbauen. Der lokale Faktor kann somit unmittelbar auf das Veränderungsvermögen Einfluss nehmen.

Die lokal hinterlegte Zeichenfolge im Schlüssel der Kommunikationseinrichtung besteht in einer Ausführungsform ferner aus einzelnen oder mehreren lokal unveränderbaren Zeichen, in dieser oder einer weiteren lokal hinterlegten Zeichenfolge, die zwischen zwei Authentifizierungszeitpunkten in der Kommunikationseinrichtung statisch bleiben. Somit haben wir also die Situation, dass der Schlüssel aus lokal veränderbaren Zeichen und lokal unveränderbaren Zeichen besteht. Die lokal veränderbaren Zeichen werden wie oben erläutert beispielsweise entsprechend einem lokal vorhandenen Messwert, einer hinterlegten Regel oder Anweisung verändert, während die unveränderbaren Zeichen zwischen zwei Authentifizierungszeitpunkten, also den Zeitpunkten, in denen eine Abfrage und ein Abgleich zwischen der Kommunikationseinrichtung und der zentralen Datenbank im Kommunikationsnetzwerk erfolgt, konserviert bleiben.

Erfindungsgemäß ist ein zweiter Schlüssel vorgesehen, der in der zentralen Datenbank hinterlegt ist. Auch dieser zweite Schlüssel umfasst eine Zeichenfolge, die aus zentral veränderbaren und zentral unveränderbaren Zeichen bzw. Zeichenfolgen besteht. Der in der zentralen Datenbank hinterlegte zweite Schlüssel besteht aus einzelnen oder mehreren Zeichen, die denen der lokal veränderbaren Zeichen der Kommunikationseinrichtung des letzten Authentifizierungszeitpunktes entsprechen. Die zentral unveränderbaren Zeichen würden daher zum Abfragezeitpunkt dem Zustand der lokal veränderbaren Zeichen bei der letzten Abfrage entsprechen. In anderen Worten: die bei der letzten Authentifizierungsabfrage lokal veränderbaren Zeichen oder Zeichenfolge der Kommunikationseinrichtung werden in die zentrale Datenbank übertragen und aktualisieren die entsprechenden zentral unveränderbaren Zeichen oder Zeichenfolge in der zentralen Datenbank. Diese Zeichen ändern sich vorzugsweise in der zentralen Datenbank bis zur nächsten Authentifizierungsabfrage nicht mehr und bleiben statisch. Die zentral veränderbaren Zeichen würden wiederum den lokal unveränderbaren Zeichen entsprechen. Durch den Vergleich mit dem letzten Zustand der veränderbaren Zeichen lässt sich feststellen, ob die übertragene Zeichenfolge mit der hinterlegten Zeichenfolge übereinstimmt, d.h. ob eine eindeutige Authentifizierung vorliegt. Im Falle einer widerrechtlichen Authentifizierung wäre die Zeichenfolge zwischen zwei Authentifizierungszeitpunkten eingesetzt worden, so dass zwei unterschiedliche Nutzer unter der gleichen Identität existieren müssen, wovon sich einer widerrechtlich authentifiziert hat.

Natürlich kann es auch vorgesehen sein, dass die zentral unveränderbaren (oder auch die lokal unveränderbaren Zeichen) sich periodisch ändern (und damit zu veränderbaren Zeichen werden) oder sich zwischen zwei Abfragezeitpunkten nicht verändern. Auch veränderbare Zeichen können in unveränderbare Zeichen transformiert werden. Insofern ist der erfindungsgemäße Schlüssel flexibel. Vorrausetzung ist jedoch die Zusammensetzung von dynamischen und statischen Zeichen. Aufgrund dieser Zusammensetzung sind die Zeichenfolgen in der Lage, sich gegenseitig zu prüfen und die Integrität der Authentifizierung sicherzustellen.

Vorzugsweise werden jedoch die lokal unveränderbaren Zeichen oder die Zeichenfolge bei einer Authentifizierungsabfrage durch die zentrale Datenbank zentral verändert. Wären diese Zeichen bei einer nachfolgenden Authentifizierungsabfrage unverändert, so könnte schnell festgestellt werden, dass die Kommunikationseinrichtung von einem Nichtberechtigten genutzt wird.

Der zweite Schlüssel der zentralen Datenbank besteht vorzugsweise aus einzelnen oder mehreren zentral veränderbaren Zeichen in dieser oder einer weiteren Zeichenfolge, die den lokal unveränderbaren Zeichen oder der Zeichenfolge der Kommunikationseinrichtung des letzten Authentifizierungszeitpunktes entsprechen. Die zentral unveränderbaren Zeichen der zentralen Datenbank werden bei einer Authentifizierungsabfrage auf die Kommunikationseinrichtung übertragen und aktualisieren die entsprechenden lokal veränderbaren Zeichen oder Zeichenfolge. Sollten diese Zeichen zumindest teilweise verändert oder manipuliert worden sein, so könnte man einen unerlaubten Zugriffsversuch eines Nichtberechtigten feststellen. Nur die zentrale Datenbank "kennt" die zentral veränderbaren Zeichen, die im Schlüssel hinterlegt sind. Umgekehrt "kennt" nur die Kommunikationseinrichtung (d.h. die lokale Datenbank) die lokal veränderbaren Zeichen. Die zentral unveränderbaren Zeichen sind in der Datenbank hinterlegt und entsprechen den Zeichen des letzten Authentifizierungszeitpunktes.

In einem weiteren Verfahrensschritt erfolgt ein Übertragen und ein Abgleich des auf der Kommunikationseinrichtung hinterlegten Schlüssels mit dem beim letzten Authentifizierungszeitpunkt in der zentralen Datenbank hinterlegten Schlüssel. Erfindungsgemäß erfolgt eine positive Authentifizierung und/oder Identifikation des Gerätes, des Dienstes, der Person und/oder des Geldmittels beim Authentifizierungszeitpunkt dann, wenn zumindest folgende Merkmale erfüllt sind:
i) zumindest teilweise Übereinstimmung der lokal unveränderbaren Zeichen oder Zeichenfolge im Schlüssel der Kommunikationseinrichtung mit den entsprechenden lokal veränderbaren Zeichen oder Zeichenfolge im letzten Schlüssel der zentralen Datenbank,
ii) zumindest teilweise fehlende Übereinstimmung der lokal veränderbaren Zeichen oder Zeichenfolge im Schlüssel der Kommunikationseinrichtung mit den entsprechenden zentral unveränderbaren Zeichen oder Zeichenfolge im Schlüssel der zentralen Datenbank.

Vorzugsweise kann eine vollständige Übereinstimmung bzw. fehlende Übereinstimmung festgelegt werden. Die lokal veränderbaren Zeichen oder Zeichenfolge zwischen zwei Authentifizierungszeitpunkten sind erfindungsgemäß nur in der Kommunikationseinrichtung, nicht jedoch in der zentralen Datenbank und die zentral veränderbaren Zeichen oder Zeichenfolge sind nur in der zentralen Datenbank, aber nicht in der Kommunikationseinrichtung veränderbar. Erfindungsgemäß ist ferner vorgesehen, dass bei einer erfolgreichen Authentifizierung die lokal unveränderbaren Zeichen oder Zeichenfolge im Schlüssel der zentralen Datenbank zurückgesetzt oder geändert werden. Somit entsprechen die lokal in der Kommunikationseinrichtung hinterlegten unveränderbaren Zeichen oder Zeichenfolge den zentral veränderbaren Zeichen oder Zeichenfolge im Schlüssel der zentralen Datenbank, wenn der Abgleich stattgefunden hat.

Durch das Zurücksetzen oder das Ändern der zentral veränderbaren (= lokal unveränderbaren) Zeichen oder Zeichenfolge im Schlüssel der zentralen Datenbank erhält die Kommunikationseinrichtung beim Authentifizierungszeitpunkt in dieser Ausführungsvariante einen weiter entwickelten "Zeichensatz". Dabei kann dieser zentral veränderbare Zeichensatz auch neue Informationen enthalten, beispielsweise einen aktualisierten Geldbetrag, ein Datum oder die Differenz zwischen zwei Abfragezeitpunkten. Erfindungsgemäß können entweder einzelne Zeichen, ganze Zeichenfolgen oder der gesamte Schlüssel zwischen der zentralen Datenbank und der Kommunikationseinrichtung (und umgekehrt) übertragen werden. Dieser neue Datensatz ändert sich nun zwischen den Authentifizierungszeitpunkten dynamisch in Abhängigkeit von nur lokal vorliegenden Faktoren, wie z.B. der Umgebungstemperatur, was eine Kopie desselben wirkungsvoll verhindert.

Durch die Kombination lokal veränderbarer und lokal unveränderbarer Zeichen bzw. zentral veränderbarer bzw. zentral unveränderbarer Zeichen (bzw. Zeichenfolgen) in der zentralen Datenbank wird ein hohes Maß an Sicherheit für die Authentifizierung und/oder Identifikation eines Gerätes, eines Dienstes, einer Person oder eines Geldmittels erreicht. Würde ein Nichtberechtigter Zugriff auf die zentrale Datenbank erhalten, so käme er nicht in Besitz der Regeln, welche die Veränderung der Zeichen in der lokalen Datenbank festlegen, da diese Regeln durch lokal veränderliche Messwerte beeinflusst oder ergänzt werden. Es kann also während der Authentifizierung weder eine gefälschte zentrale Datenbank, noch eine gefälschte lokale Datenbank vorgetäuscht werden. Auch kennt ein Fälscher nicht die Umstände, Faktoren und insbesondere lokalen dynamischen Werte, welche die dynamischen Veränderungen beeinflussen können. Selbst wenn der Fälscher gleichzeitigen Zugriff auf die zentrale und lokale Datenbank hätte, könnte er sich nicht erfolgreich authentifizieren und würde spätestens bei einer Abfrage des rechtmäßigen Benutzers aufgedeckt werden, da die durch ihn bewirkten Änderungen auf der zentralen Datenbank (ausgelöst durch die erfolgten Authentifizierungen) nicht mehr denjenigen der lokalen Datenbank des rechtmäßigen Benutzers entsprechen. Wird diese Fälschungssicherheit mit einem biometrischen Merkmal verbunden verliert ein Fälscher sämtliche Möglichkeiten unbemerkt die Identität einer anderen Person vorzutäuschen.

Das Verfahren funktioniert natürlich auch in Umkehrrichtung, d.h. die dynamisch veränderbaren Zeichen oder die Zeichenfolge ist in der zentralen Datenbank hinterlegt. Daneben können die Zeichenfolgen Zeichen enthalten, die sich nur in der Kommunikationseinrichtung dynamisch verändern und/oder Zeichen, die sich nur in der zentralen Datenbank dynamisch verändern. Somit ist die erfindungsgemäße Dynamik in verschiedenen Stufen (nur lokal, nur zentral oder lokal-zentral) einsetzbar.

Setzt man die oben für die Kommunikationsvorrichtung beschriebenen Prinzipen auf die zentrale Datenbank um, so umfasst der Schlüssel der zentralen Datenbank dynamisch veränderbare Zeichen. Sicherheitserhöhend sind letztendlich die dynamischen Zeichen, während die statischen in der Regel zur leichteren Wiedererkennung dienen. In einer Variante des Verfahrens können sie auch weggelassen werden.

Erfindungsgemäß umfasst das Verfahren die folgenden Schritte:
- Bereitstellen eines ersten Schlüssels in der zentralen Datenbank, der wenigstens eine Zeichenfolge umfasst, bestehend aus
   - einzelnen oder mehreren zentral veränderbaren Zeichen, die sich in Abhängigkeit einer messbaren Größe, eines von der messbaren Größe abhängigen Algorithmus, Regel und/oder Anweisung in der zentralen Datenbank zwischen zwei Authentifizierungszeitpunkten dynamisch verändern,
   - einzelnen oder mehreren zentral unveränderbaren Zeichen in dieser oder einer weiteren zentral hinterlegten Zeichenfolge, die zwischen zwei Authentifizierungszeitpunkten in der zentralen Datenbank statisch bleiben,
- Bereitstellen eines zweiten Schlüssels in der Kommunikationseinrichtung, der eine Zeichenfolge umfasst, bestehend aus
   - einzelnen oder mehreren lokal veränderbaren Zeichen in dieser oder einer weiteren Zeichenfolge, die den zentral unveränderbaren Zeichen oder der Zeichenfolge der zentralen Datenbank des letzten Authentifizierungszeitpunktes entsprechen,
   - einzelnen oder mehreren lokal unveränderbaren Zeichen, die denen zentral veränderbaren Zeichen oder der Zeichenfolge der zentralen Datenbank des letzten Authentifizierungszeitpunktes entsprechen,
- Übertragen und Abgleich der in der zentralen Datenbank und der Kommunikationseinrichtung hinterlegten Schlüssel.
   Dabei erfolgt eine positive Authentifizierung und/oder Identifikation des Gerätes, des Dienstes, der Person und/oder des Geldmittels beim Authentifizierungszeitpunkt dann, wenn zumindest folgende Merkmale erfüllt sind:
   i. zumindest teilweise Übereinstimmung der zentral unveränderbaren Zeichen oder Zeichenfolge im Schlüssel der zentralen Datenbank mit den entsprechenden lokal veränderbaren Zeichen oder Zeichenfolge im Schlüssel der Kommunikationseinrichtung,
   ii. zumindest teilweise fehlende Übereinstimmung der zentral veränderbaren Zeichen oder Zeichenfolge im Schlüssel der zentralen Datenbank mit den entsprechenden lokal unveränderbaren Zeichen oder Zeichenfolge im letzten Schlüssel der Kommunikationseinrichtung,
wobei die zentral veränderbaren Zeichen oder Zeichenfolge zwischen zwei Authentifizierungszeitpunkten nur in der zentralen Datenbank, nicht jedoch in der Kommunikationseinrichtung und die lokal veränderbaren Zeichen oder Zeichenfolge nur in der Kommunikationseinrichtung, aber nicht in der zentralen Datenbank veränderbar sind.

Vorzugsweise kann es vorgesehen sein, dass die veränderbaren Zeichen bei einer Authentifizierung in unveränderbare, statische Zeichen umgewandelt und anschließend in die an die Partner-Datenbank zu übermittelnde Zeichenfolge integriert oder an dieser angeknüpft werden. In diesem Fall würde die statische Zeichenfolge die übermittelten veränderbaren Zeichen des letzten Authentifizierungszeitpunktes enthalten.

Vorzugsweise ist bei einer weiteren Ausführungsvarianten vorgesehen, dass die oben beschriebenen Prinzipen des ersten lokalen Schlüssels der Kommunikationseinrichtung und des zweiten zentralen Schlüssels der zentralen Datenbank sinngemäß umgesetzt werden für den ersten zentralen Schlüssel der zentralen Datenbank und dem zweiten lokalen Schlüssel der Kommunikationseinrichtung. Dies bedeutet, dass (zusätzlich oder alternativ) die zentrale Datenbank dynamisch veränderbare Zeichen oder eine Zeichenfolge umfasst, die aufgrund der oben beschriebenen Einflüsse fortlaufend verändert werden/wird. Der zentral veränderbare Schlüssel wäre demnach immer dynamisch veränderbar und nicht nur zwischen zwei Authentifizierungszeitpunkten.

Erfindungsgemäß kann ferner vorgesehen sein, dass der lokal oder zentral hinterlegte Schlüssel in der Kommunikationseinrichtung aus mehreren Zeichenfolgen besteht, wobei eine Zeichenfolge ausschließlich aus veränderbaren Zeichen zusammengesetzt ist, während die weitere Zeichenfolge lediglich aus unveränderbaren Zeichen zusammengesetzt ist und eine dritte Zeichenfolge, die den Stand der veränderbaren Zeichen der jeweils anderen Datenbank zum Zeitpunkt der letzten Authentifikation festhält. Alternativ kann auch eine Zeichenfolge vorgesehen sein, in der einzelne oder mehrere Zeichen veränderbar sind, während andere Zeichen in dieser Zeichenfolge nicht veränderbar sind. Alternativ kann auf die statischen Zeichen vollständig verzichtet und lediglich die dynamischen Zeichen zur Authentifikation beigezogen werden. Verschiedenste Kombinationen sind denkbar.

In einer bevorzugten Ausführungsform werden bei einer erfolgreichen Authentifizierung die lokal unveränderbaren Zeichen oder die Zeichenfolge im Schlüssel der Kommunikationseinrichtung und/oder der zentralen Datenbank zurückgesetzt oder geändert und anschließend an die Kommunikationseinrichtung bzw. Datenbank übertragen. Dabei werden die übermittelten Zeichen oder Zeichenfolgen in der Kommunikationseinrichtung bzw. der zentralen Datenbank in Abhängigkeit von der Senderichtung vollständig oder teilweise ersetzt oder gelöscht.

In einer weiteren bevorzugten Variante können die Kommunikationseinrichtung und/oder die zentrale Datenbank auch mehrere Schlüssel mit veränderbaren und/oder unveränderbaren Zahlenfolgen umfassen um eine "Überkreuzsicherung" durchzuführen. Dies bedeutet, dass ein Zurücksetzen oder eine Änderung der statischen Zeichen sowohl lokal als auch zentral erfolgen kann. Umgekehrt kann auch die zentrale Datenbank dynamische Zeichen oder Zeichenfolgen umfassen, die sich zwischen zwei Authentifizierungszeitpunkten fortlaufend ändern, ohne dass die Kommunikationseinrichtung bzw. die lokale Datenbank diese Regel oder die Einflüsse auf diese Regel "kennt". Das gleiche System kann auch für die zentrale Datenbank angewendet werden. Damit werden sämtliche Möglichkeiten und Kombinationen abgedeckt, um das erfindungsgemäße Sicherheitsverfahren sowohl auf der Kommunikationseinrichtung als auch in der zentralen Datenbank umzusetzen. Natürlich funktioniert das Verfahren auch zwischen zwei Kommunikationseinrichtungen oder zwischen zwei zentralen Datenbanken. Die Schlüssel können auf stationären, mobilen oder portablen Einrichtungen hinterlegt werden und bekommen eine Zuordnung als "lokaler" oder "zentraler" Schlüssel. Wichtig ist hierbei jedoch, dass die neuen dynamischen Veränderungen dem jeweils anderen Partner nicht bekannt sind.

In einer bevorzugten Ausführungsform umfasst der erste Schlüssel in der Kommunikationseinrichtung und der zweite Schlüssel in der zentralen Datenbank weitere identitätsbestimmende Zeichen oder eine Zeichenfolge, mit denen das Gerät, der Dienst, die Person oder das Geldmittel eindeutig identifizierbar ist/sind wobei eine Identifizierung zum Authentifizierungszeitpunkt dadurch erfolgt, dass die in der Kommunikationseinrichtung hinterlegte/n Identitäts-Zeichen oder Zeichenfolge/n mit den/der in der zentralen Datenbank hinterlegten Identitäts-Zeichen oder Zeichenfolge/n zumindest teilweise übereinstimmt.

Alternativ kann in einer Variante des Verfahrens durch den später beschriebenen doppelten Handschlag auf die teilweise Übereinstimmung der hinterlegten Identitätszeichen oder Zeichenfolge(n) gänzlich verzichtet werden, sodass bei den Schlüsseln (DSC) lediglich dynamisch veränderbare Zeichen eingesetzt werden. In einer Variante wäre es ausreichend, dass beispielsweise nur der Energieladezustand oder ein anderer Messwert als dynamischer Code an den anderen Kommunikationsteilnehmer übermittelt wird.

Vorzugsweise werden die Änderungen in der veränderbaren Zeichenfolge zeitgesteuert, impulsgesteuert, bewegungsabhängig, ortsabhängig, zeitabhängig, temperaturabhängig, erschütterungsabhängig, werteabhängig und/oder nach sonstigen dienstspezifischen Vorgaben durchgeführt. Beispielsweise können Positionsangaben über einen GPS-Sensor in der Zeichenfolge als Code hinterlegt werden. Ferner können auch der Zeitpunkt der Authentifizierung, der Kommunikationseinrichtung bei der zentralen Datenbank oder auch die Zeitunterschiede der letzten Authentifizierungszeitpunkte in der veränderbaren Zeichenfolge hinterlegt sein. Erschütterungssensoren können zudem Messdaten liefern und Quersummen oder Mittelwerte bilden, die zu einem Zahlenwert führen, der wiederum in der veränderbaren Zeichenfolge hinterlegt werden kann. Bei einem Bezahlsystem kann ferner eine wertabhängige Veränderung der Zeichenfolge durchgeführt werden, beispielsweise kann die veränderbare Zeichenfolge einen Zahlenwert für eine Währung enthalten, mit der ein Bezahlvorgang durchgeführt werden kann. Die Differenz der eingekauften Ware oder Dienstleistung werden dann von diesem Zahlenwert abgetragen und als veränderter Zahlenwert in der Zeichenfolge hinterlegt. Ferner ist auch möglich, dass in der veränderbaren oder unveränderbaren Zahlenfolge der Wert eines Bezahlmittels festgelegt ist. So kann beispielsweise ein Zahlencode mit einem darin "hinterlegten" Geldwert zum bargeldlosen Bezahlen verwendet werden. Dabei kann jeder Code einem "digitalen Geldschein" entsprechen. Das Rückgeld würde wiederum über weitere digitale Geldscheine erfolgen, indem die entsprechenden wertabhängigen Zeichenfolgen übermittelt werden. Ferner kann die Währung je nach geographischer Position automatisch umgerechnet und angepasst werden.

Die erfindungsgemäße zentrale Datenbank kann in einer beliebigen Struktur oder einem Gerät integriert sein. Der Schlüssel der Kommunikationseinrichtung wird vorzugsweise in einer lokalen Datenbank hinterlegt. Vorzugsweise sind die Schlüssel kryptografisch codiert.

Vorzugsweise umfassen die erfindungsgemäßen Zeichenfolgen Buchstaben, Zahlen, Zeichen, Abbildungen und/oder Symbole. Zu den Abbildungen gehören beispielsweise Grafiken, Farbgebungen, Zeichnungen oder Muster, die als Zeichen oder Zeichenfolge bei dem jeweiligen Schlüssel der zentralen Datenbank bzw. der Kommunikationseinrichtung hinterlegt sein und auch Werten zugeordnet sein können. So können sich auch Muster oder Farbgebungen innerhalb der Zeichenfolge dynamisch verändern. Auch die gesamte Zeichenfolge an sich kann als Muster dargestellt sein und zumindest partiell einer dynamischen Veränderung im Sinne der vorliegenden Erfindung unterliegen.

Um eine Fälschung oder eine Nachahmung möglichst auszuschließen, ist in einer bevorzugten Variante vorgesehen, dass die lokal veränderbare Zeichenfolge bzw. Zeichen in der Kommunikationseinrichtung und/oder der zentralen Datenbank Zeichen umfasst, die sich unterschiedlich schnell verändern. So können einzelne oder ganze Zeichenfolgen sich ändernde Zahlenwerte umfassen, die sich sekündlich verändern. Ferner können sich einzelne Zeichen oder ganze Zeichenfolgen im Minuten- oder Stunden-, Tage- oder Wochentakt ändern. Die entsprechenden Regeln oder Algorithmen können von dem jeweiligen Serviceanbieter vorgegeben werden. Dabei können die Regeln auch rein zufällig sein. Dabei kann vorzugsweise vorgesehen sein, dass in der Kommunikationseinrichtung und/oder der zentralen Datenbank zusätzlichen ein Algorithmus, eine Regel und/oder eine Anweisung hinterlegt ist, die festlegt, ob und wie sich eine Zahlenfolge zwischen zwei Authentifizierungszeitpunkten fortlaufend verändert. Dabei können beispielsweise in der Zeichenfolge festgelegte Werte oder zwischen zwei Grenzwerten pendelnde Werte und/oder ansteigende oder absteigende Zahlenfolgen definiert werden.

In einer bevorzugten Ausführungsform kann ferner vorgesehen sein, dass die veränderbare Zeichenfolge den letzten Authentifizierungszeitpunkt, den Wert eines Geldmittels, einen physikalischen Wert, eine Positionsangabe, ein Datum, einen Zeitwert, eine Quersumme und/oder eine Prüfsumme umfasst. Ferner kann vorgesehen sein, dass auch die Zeitdifferenz zwischen zwei Abfragezeitpunkten zwischen der Kommunikationseinrichtung und der zentralen Datenbank als Differenzzeitwert hinterlegt wird. Auch können die Werte der veränderbaren Zeichen zum letzten Authentifizierungszeitpunkt mit einem Algorithmus verschlüsselt werden. Dieser Algorithmus kann beispielsweise auf die oben genannten dynamischen Faktoren aufbauen und somit zu individuellen verschlüsselten Zeichenfolgen in der zentralen Datenbank und/oder der lokalen Datenbank führen. Bei einer Authentifizierungsabfrage können das Datum und/oder die Zeit mitübertragen werden, so dass der Zeitpunkt der letzten Authentifizierung sowohl bei der Kommunikationseinrichtung und/oder bei der zentralen Datenbank Teil der Zeichenfolge wird.

Das Zurücksetzen oder die Änderung der lokal unveränderbaren Zeichen von der zentralen Datenbank oder der zentral unveränderbaren Zeichen in der Kommunikationseinrichtung erfolgt vorzugsweise beim Authentifizierungszeitpunkt über eine zentral bzw. lokal hinterlegte Regel, eine Anweisung, werteabhängig, einen Algorithmus und/oder durch sonstige dienstspezifische Vorgaben. Ferner kann in einer bevorzugten Variante vorgesehen sein, dass der lokale Schlüssel der Kommunikationseinrichtung nach erfolgter Übertragung an die zentrale Datenbank teilweise oder ganz gelöscht oder entwertet wird.

Vorzugsweise umfasst die lokal hinterlegte Zeichenfolge eine identitätsbestimmende Zeichenfolge, mit der das Gerät, der Dienst, die Person und/oder das Geldmittel eindeutig identifizierbar ist. Diese identitätsbestimmende Zeichenfolge kann bei einer Authentifizierungsabfrage durch eine weitere neue Zeichenfolge ergänzt werden, über die ein davon unabhängiges Gerät, ein Dienst, eine Person oder ein Geldmittel identifizierbar wird. Beispielsweise kann auf diese Weise ein Geldwert einer bestimmten Person zugeordnet werden, wenn diese sich zum Authentifizierungszeitpunkt in einem System anmeldet. Auf diese Weise können einer Person in hierarchischer Weise Funktionen, Dienste oder Geldbeträge zugeordnet werden. Es ist auch möglich Familien und andere Personengruppen hierarchisch zu erfassen und zum Beispiel einer Landesidentität zuzuordnen.

Das erfindungsgemäße Verfahren verhindert, dass eine Kopie der Daten der lokalen Kommunikationseinrichtung und/oder der zentralen Datenbank widerrechtlich genutzt werden kann. Die dynamischen, veränderbaren Zeichen werden je nach Ausführungsvariante entweder auf der zentralen Datenbank und/oder der Kommunikationseinrichtung verändert, wobei auch unterschiedliche Zeichen oder Zeichenfolgen vorgesehen sein können, die sich auf den jeweiligen Einrichtungen unterschiedlich verändern, wodurch die Sicherheit weiter erhöht wird. In der Regel wird auch die Kommunikationseinrichtung eine Datenbank enthalten, in welcher der Schlüssel hinterlegt ist.

Erst zum Authentifizierungszeitpunkt werden die veränderten Zeichen oder Zeichenfolge/n innerhalb dieser Zeichenfolge oder einer weiteren, separaten Zeichenfolge an die zentrale Datenbank übertragen und dort mit den zuletzt hinterlegten Zeichen oder Zeichenfolge/n verglichen. Dabei sind die lokal unveränderbaren Zeichen nur der zentralen Datenbank bekannt. Sollte eine Änderung dieser Zeichen oder Zeichenfolgen beispielsweise auf der lokalen Datenbank erfolgen, würde dies auf einen unberechtigten Zugriff oder eine Manipulation hinweisen. Die unveränderbaren Zeichen oder Zeichenfolge können im Prinzip statisch bleiben. Jedoch wird die Sicherheit zusätzlich erhöht, wenn die lokal unveränderbaren Zeichen von der zentralen Datenbank nach jedem Auslesevorgang wieder zurückgesetzt und/oder ganz oder teilweise ersetzt werden. Wie bereits oben schon angemerkt, ist es natürlich auch möglich, dass die zentral unveränderbaren Zeichen von der Kommunikationseinrichtung nach einem Auslesevorgang bzw. zum Authentifizierungszeitpunkt zurückgesetzt, geändert werden oder aber unverändert bleiben.

In einer bevorzugten Variante kann ferner vorgesehen sein, dass die unveränderbaren Zeichen oder Zeichenfolge lokal wie veränderbare Zeichen verarbeitet werden, d.h. geändert, ersetzt oder gelöscht werden aber beim Authentifizierungszeitpunkt dann durch die zentrale Datenbank wieder zurückgesetzt bzw. wieder geändert werden.

Daneben können Übermittlungen eines früheren Authentifizierungszeitpunktes der unveränderbaren Zeichen, welche in Unkenntnis durch die lokale Kommunikationseinrichtung bzw. deren Datenbank verändert wurden zentral gespeichert und gegebenenfalls zusätzlich mit den neu übermittelten Zeichen oder Zeichenfolge verglichen werden, um sicherzustellen, dass die neu übermittelten Zeichen oder Zeichenfolge keine Kopie eines früheren Zustandes sein kann/können. Alternativ können die unveränderbaren Zeichen zu jedem Abfragezeitpunkt über einen Algorithmus in der zentralen Datenbank durch neue unveränderbare Zeichen ersetzt werden. In einer bevorzugten Variante ist vorgesehen, dass diese Zeichen oder Zeichenfolge bis zur nächsten Abfrage auf der zentralen Datenbank konserviert bleiben. Lokale Veränderungen dieser Zeichen werden bei jeder Abfrage durch neue Einträge der zentralen Datenbank überschrieben. Die Kombination aus veränderbaren/unveränderbaren Zeichen oder Zeichenfolge ermöglicht eine größte mögliche Flexibilität auch hinsichtlich der Zuordnung eines Wertes innerhalb einer bestimmten Zeichenfolge. So können beispielsweise ein Datum, eine Wertangabe, physikalische Parameter oder auch andere Informationen in der Zeichenfolge integriert sein. Diese Informationen können je nach Art entweder in der lokal veränderbaren oder lokal unveränderbaren bzw. in den zentral veränderbaren bzw. zentral unveränderbaren Zeichen oder Zeichenfolgen integriert sein. Demzufolge kann die Zeichenfolge den in ihr integrierten Wert ändern, beispielsweise wenn Zahlungseingänge oder Zahlungsausgänge einem Nutzer zugeordnet werden, auch ohne dass sich dieser identifiziert oder angemeldet hat.

In einer Variante kann vorgesehen sein, dass sich die statischen Zeichen der zentralen Datenbank (oder sinngemäß der Kommunikationseinrichtung) bei einer Authentifizierungsabfrage unterschiedlich verhalten. So können die Zeichen bei einer Abfrage entweder unverändert bleiben, zurückgesetzt oder durch ein neues Zeichen ersetzt werden, wodurch die statischen Zeichen in verschiedene Untergruppen eingeteilt werden können. Dies soll in einem Beispiel erläutert werden:

Eine lokal veränderbare Zeichenfolge besteht aus: **1** 2 **3** 4 5 **6** 7, wobei die Ziffern 1, 3 und 6 bei einer Authentifizierung herangezogen werden. Eine zentral veränderbare Zeichenfolge besteht aus: 5 **2** 7 3 **4** 0 **9**, wobei die Ziffern 2, 4 und 9 bei einer Authentifizierung herangezogen werden. Bei einer Authentifizierung wird nun ein neuer Code generiert, bestehend aus den dynamisch veränderbaren Ziffern der Kommunikationseinrichtung und der zentralen Datenbank, d.h. 1 2 3 4 6 9. Diese Zeichenfolge wird als unveränderbare statische Reihenfolgen zwischen zwei Authentifizierungsabfragen in der zentralen Datenbank und der lokalen Kommunikationseinrichtung hinterlegt. Die sich dynamisch veränderbaren Zeichen würden sich fortlaufend ändern, während diese statische Zeichen unverändert bleiben. Wird die Kommunikationseinrichtung beispielsweise widerrechtlich genutzt, so würde bei der nächsten Abfrage diese unveränderbare statische Zeichenfolge durch eine neue ersetzt werden, wieder zusammengesetzt aus dynamischen Zeichen der Kommunikationseinrichtung und dynamischen Zeichen der zentralen Datenbank. Der rechtmäßige Nutzer würde bei seinem Authentifizierungsversuch sofort bemerken, dass jemand widerrechtlich eine Abfrage getätigt hat, da er sich nicht mehr authentifizieren kann - der Schlüssel hat sich zwischenzeitlich in der zentralen Datenbank geändert. Die Sicherheit entsteht in diesem Fall dadurch, dass nur die zentrale Datenbank die statischen Zeichen des letzten Authentifizierungszeitpunktes "kennt". Ein nachfolgender Authentifizierungsversuch würde sofort erkannt werden.

Um die Nutzung einer gestohlenen Kommunikationseinrichtung zu unterbinden sind vorzugsweise biometrische Merkmale des Teilnehmers nutzbar. Hierzu zählen beispielsweise Fingerabdrücke, die Iris oder die Venenstruktur, die Stimme oder ein bestimmtes personenspezifisches Verhalten. Daneben kann es auch objektspezifische Merkmale geben, bei denen es möglich ist, ein Gerät über spezifische Merkmale zu identifizieren. Beispielsweise können Quersummen oder Durchschnittswerte aus gemessenen physikalischen Parametern gebildet werden. Hierunter könnte beispielsweise die Summe der gemessenen Temperaturen, die Quersumme der zuletzt getätigten Anrufe oder die Summe der von einem Erschütterungssensor ermittelten Erschütterungen herangezogen werden. Die daraus gebildeten Zahlenwerte können die zentral hinterlegte Zeichenfolge teilweise oder ganz ersetzen. Außerdem können vorzugsweise hochfälschungssichere statische und dynamische Sicherheitselemente, wie z.B. ein Krakelee-Muster eingesetzt werden, insbesondere, wenn diese einem biometrischen Sicherheitsmerkmal des Benutzers zugeordnet sind.

Die hier vorgestellten Regeln können natürlich auch kombiniert oder vertauscht sein, d.h. dass sich zwischen zwei Authentifizierungszeitpunkten die veränderbaren Zeichen nicht lokal verändern sondern zentral verändern. Daneben können auch mehrere Schlüssel vorgesehen sein, in denen die Kombination zwischen veränderbaren Zeichen und unveränderbaren Zeichen beliebig oft und in unterschiedlichen Kombinationen ausgeführt werden. Ferner ist es möglich, das vormals veränderbare Zeichen in unveränderbare Zeichen und umgekehrt überführt werden. Schließlich können die hier beschriebenen Authentifizierungsabfragen auch mehrmals in verschiedenen Ebenen durchgeführt werden, wodurch zusätzliche Sicherheit entsteht.

Wie oben beschrieben, gibt es bei den unveränderbaren Zeichen solche, die der Partner-Datenbank bekannt sind und solche, die der Partner-Datenbank unbekannt sind. Als "Partner-Datenbank " bezeichnet entweder die zentrale Datenbank oder die lokale Datenbank in der Kommunikationseinrichtung.

Vorzugsweise lassen sich die unveränderbaren Zeichen in zwei Untergruppen unterteilen:
1. Zeichen, welche zu keinem Zeitpunkt veränderbar sind. In diesem Fall ist die Partner-Datenbank über deren Unveränderbarkeit informiert.
2. Zeichen, welche durch die Partner-Datenbank verändert werden können, da diese nicht über deren Unveränderbarkeit informiert ist.

Die zweite Gruppe, welche der Partner-Datenbank nicht als unveränderbar bekannt ist, kann von dieser in Unkenntnis von deren Unveränderbarkeit und im Rahmen der dynamischen Veränderung der Zeichenfolge verändert werden. Für diesen Fall werden die Zeichen dieser Untergruppe in drei weitere Zeichen-Untergruppen aufgeteilt:
a. Zeichen, die aufgrund einer Authentifikationsabfrage wieder auf den ursprünglichen Wert zurückgesetzt werden,
b. Zeichen, die anlässlich einer Authentifikationsabfrage einen neuen Wert zugeordnet bekommen, wobei ihr ein auf der Partner-Datenbank veränderter Wert für die Berechnung des neuen Wertes herangezogen werden kann, wie auch weitere Faktoren, beispielsweise solche, die zur dynamischen Veränderung der Zeichenfolge generell verwendet werden.
c. Zeichen, die anlässlich eines Authentifikationsprozesses die auf der Partner-Datenbank erfolgte Veränderung übernehmen, also in diese übergehen.

Sobald unveränderbare Zeichen in Unkenntnis auf der Partner-Datenbank dem dynamischen Veränderungsprozess unterworfen werden, empfiehlt es sich, der übermittelten Zeichenfolge die ursprüngliche Zeichenfolge unmittelbar nach der letzten Authentifizierung anzuhängen oder in diese zu integrieren, bevor sie dynamisch verändert wird. Dieses Vorgehen ermöglicht einen scharfen Vergleich anstelle eines unscharfen Vergleiches und stellt kein Sicherheitsrisiko dar, da die ursprünglich herausgegebene Zeichenfolge nur Teil des gesamten Zeichenfolge bleibt, welche sich durch den ebenfalls in ihr integrierten dynamischen Veränderungsprozess wirkungsvoll gegen jegliche Art des Kopierens schützt.

Um Authentifizierungsversuchen mit gegebenenfalls angefertigten Kopien oder Fälschungen der dynamischen Zeichenfolge vollständig auszuschließen, wird in einer bevorzugten Ausführungsform der Authentifizierungsprozess durch eine Vor-Authentifizierung ergänzt. Diese kann im Falle einer Authentifizierungsanfrage der anfragenden Datenbank von der Partner-Datenbank ausgelöst werden, was zur unmittelbaren Veränderung des dynamischen Codes bei der originalen anfragenden Datenbank, wie auch bei der Partner-Datenbank führt. Dies ist jedoch nicht bei einer gegebenenfalls anfragenden Fälschung oder Kopie der Fall, da zu ihr seitens der originalen Partner-Datenbank keine bestehende Verbindung existiert. Ein Informationsaustausch findet dann automatisch zur originalen, scheinbar anfragenden Datenbank und nicht zur eigentlich anfragenden Fälschung statt. Dies führt zu einer Änderung der Zeichenfolge oder einzelner Zeichen, wodurch die Fälschung veraltet und damit wertlos wird. Es kann somit kein erfolgreicher Authentifizierungsversuch mit einer gefälschten Zeichenfolge durchgeführt werden. Aufbauend auf der Vor-Authentifikation kann alternativ auf statische Zeichenfolgen vollständig verzichtet werden.

Es wird demzufolge der Kontakt zur letzten authentifizierten Partner-Datenbank gesucht, wobei eine Fälschung und Kopie durch die Vor-Authentifikation bereits beim ersten, eigentlichen Authentifizierungsversuch erkannt wird. Sollte die letzte authentifizierte Partner-Datenbank zum Zeitpunkt der Vor-Authentifikation unerreichbar sein, wird eine entsprechende Warnung abgegeben und der Authentifizierungsprozess wird entweder nicht, oder nur scheinbar durchgeführt, beispielsweise um den Standort des Fälschers feststellen zu können. Eine Anfrage durch eine unerreichbare Datenbank reicht aus, um einen möglichen Fälschungsangriff festzustellen.

In einer bevorzugten Variante umfasst die vorliegende Erfindung ein Verfahren zur Authentifizierung und/oder Identifikation eines Gerätes, eines Dienstes, einer Person und/oder eines Geldmittels in einem Kommunikationsnetzwerk, bestehend aus einer ersten Kommunikationseinrichtung und einer weiteren Kommunikationseinrichtung, wie einem zentralen Server. Zwischen der ersten Kommunikationseinrichtung und der weiteren Kommunikationseinrichtung, z.B. dem zentralen Server, wird eine Authentifizierungsabfrage durchgeführt. In dieser Variante wird zunächst ein erster Schlüssel in der Kommunikationseinrichtung bereitgestellt, der wenigstens eine Zeichenfolge umfasst, bestehend aus einzelnen oder mehreren lokal veränderbaren Zeichen, die sich in Abhängigkeit einer mit technischen Mitteln messbaren Größe, eines von dieser abhängigen Algorithmus, einer Regel und/oder einer Anweisung in der Kommunikationseinrichtung zwischen zwei Authentifizierungszeitpunkten dynamisch verändern. Bei dem Schlüssel handelt es sich beispielsweise um einen Code, einen Wert oder eine Zeichenfolge. Vorzugsweise kann der Schlüssel zusätzlich einzelne oder mehrere lokal unveränderbare Zeichen in dieser oder einer weiteren lokal hinterlegten Zeichenfolge umfassen, die zwischen zwei Authentifizierungszeitpunkten in der Kommunikationseinrichtung statisch bleiben.

Anschließend wird dieser erste Schlüssel der Kommunikationseinrichtung, der dem dynamischen Code entspricht, an den zentralen Server über einen Kommunikationskanal übermittelt. Vorzugsweise erfolgt die Übermittlung verschlüsselt. Von dem zentralen Server wird ein zweiter Schlüssel (zentraler Serverschlüssel) bereitgestellt, wobei der Schlüssel eine Zeichenfolge umfasst, bestehend aus einzelnen oder mehreren zentral veränderbaren Zeichen, die sich in Abhängigkeit einer messbaren Größe, eines von dieser abhängigen Algorithmus, einer Regel und/oder einer Anweisung in der Kommunikationseinrichtung zwischen zwei Authentifizierungszeitpunkten dynamisch verändern. In einer bevorzugten Variante kann der zweite Schlüssel zusätzlich einzelne oder mehrere zentral unveränderbare Zeichen in dieser oder einer weiteren lokal hinterlegten Zeichenfolge umfassen, die zwischen zwei Authentifizierungszeitpunkten in der Kommunikationseinrichtung statisch bleiben.

Die Messgröße (z.B. Temperatur, Luftdruck, GPS-Daten, Ladezustand der Batterie), die zur Veränderung der dynamischen Zeichen herangezogen wird, wird vorzugsweise auf dem jeweiligen Gerät, in dem sich der dynamische Code (DSC) befindet, d.h. entweder auf dem Mobilgerät, einem zentralen Server oder auf dem Mobilgerät eines weiteren Teilnehmers mit entsprechenden technischen Einrichtungen ermittelt. Hierbei kann beispielsweise eine Temperaturmesseinrichtung, eine Luftdruckmesseinrichtung, ein GPS-Ortungsgerät, ein Ladesensor, eine Optik etc. herangezogen werden.

In einem weiteren Schritt werden der von dem zentralen Server empfangene erste Schlüssel der Kommunikationseinrichtung und der zweite Schlüssel des zentralen Servers über einen Kommunikationskanal an die Kommunikationseinrichtung übermittelt. Der von dem zentralen Server übertragene dynamische Code umfasst somit den Schlüssel der ersten Kommunikationseinrichtung und den Schlüssel des zentralen Datenbankservers. In der Kommunikationseinrichtung wird anschließend überprüft, ob der von dem zentralen Server erhaltene erste Schlüssel der Kommunikationseinrichtung mit dem zuvor übertragenen Schlüssel übereinstimmt. Wenn die Überprüfung positiv verläuft, wird von der Kommunikationseinrichtung der von dem zentralen Server erhaltene erste Schlüssel der Kommunikationseinrichtung und der zweite Schlüssel des zentralen Servers über einen Kommunikationskanal wieder an den zentralen Server übermittelt. Dort wird überprüft, ob der erste Schlüssel der Kommunikationseinrichtung und der zweite zentrale Schlüssel des zentralen Servers mit dem in zweiten Schritt übermittelten Schlüssel übereinstimmen. Wenn auch diese Abfrage positiv verläuft, werden der erste Schlüssel der Kommunikationseinrichtung und der zweite Schlüssel des zentralen Servers zusammen mit einem Handlungscode über einen Kommunikationskanal zurück an die Kommunikationseinrichtung gesendet. Jeder Handlungscode ist einer bestimmten Handlung zugeordnet. Anhand des Handlungscodes kann der authentifizierte Benutzer die gewünschte Handlung ausführen, beispielsweise die Vornahme einer Überweisung oder die Buchung eines Dienstes. Bedarfsweise kann hierbei nochmals die Bestätigung über ein weiteres Sicherheitsmerkmal, wie z.B. ein biometrisches Merkmal herangezogen werden. Dies läuft vorzugsweise alles im Hintergrund auf dem Mobilgerät ab, so dass der Benutzer keine umständlichen Eingaben vorzunehmen braucht. Dabei kann vorgesehen sein, dass der Benutzer die Handlung nochmals bewusst bestätigt.

Die Übertragung der Zeichen oder Zeichenfolge kann über ein Netzwerk oder manuell erfolgen. Beispielsweise kann eine Zeichenfolge auch manuell in ein Eingabegerät eingegeben (z.B. über eine Zahlentastatur oder Sprecheinrichtung) oder über einen Scanner eingelesen werden.

Zusammen mit dem dynamischen Sicherheitscode können zudem auch weitere Daten oder Datenpakete übermittelt werden. Dabei ist in einer Variante vorgesehen, dass einzelne Datenfragmente - ähnlich einem Puzzle - an unterschiedlichen Orten gespeichert werden, was die Sicherheit zusätzlich erhöht. Auch können die dynamischen Zeichen in statische Zeichen umgewandelt werden oder umgekehrt.

Der hier vorgestellte dynamische Sicherheitscode (DSC) benützt somit lokale Parameter, die sich beispielsweise in einem Mobilgerät laufend verändern. Bei einem Mobiltelefon kann der Batterieladezustand als lokaler Faktor herangezogen werden. Der jeweils gültige Wert kann nie im Voraus berechnet werden, selbst wenn der Algorithmus als solcher bekannt ist.

Das Kommunikationsnetzwerk arbeitet vorzugsweise verschlüsselt und stellt sicher, dass eine Anfrage von der berechtigten Person stammt. In einer bevorzugten Variante kann auch der Sicherheitscode selbst verschlüsselt sein und über gesicherte Kommunikationskanäle übermittelt werden.

Die vorliegende Erfindung wird in den nachfolgenden Zeichnungen näher erläutert.

### Wege zur Ausführung der Erfindung und gewerbliche Verwertbarkeit:

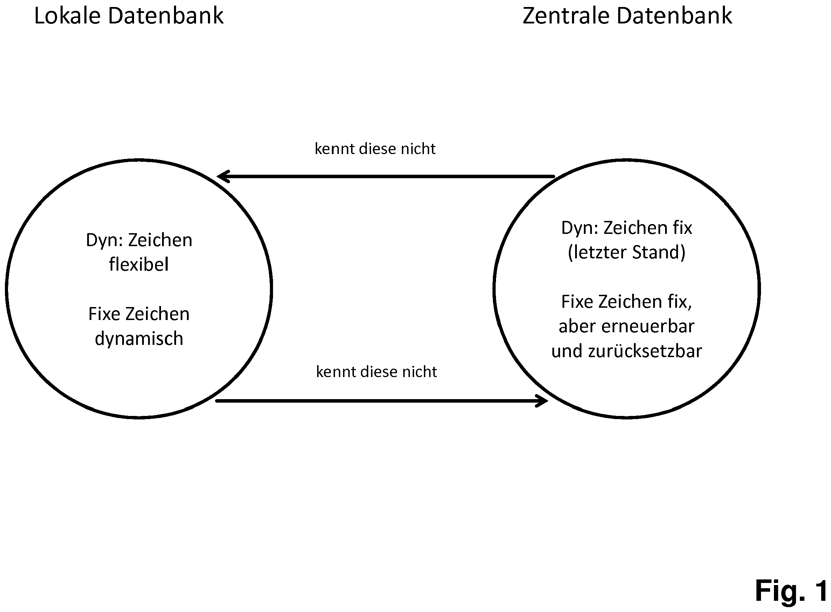

In Fig. 1 ist ein Anwendungsbeispiel gezeigt, bei dem in einem Kommunikationsnetzwerk eine lokale Datenbank und eine zentrale Datenbank genutzt werden. Die lokale Datenbank kann beispielsweise Bestandteil einer Kommunikationseinrichtung sein, beispielsweise einem Mobiltelefon. Die zentrale Datenbank kann wiederum auf einem Server oder einer weiteren Kommunikationseinrichtung (z.B. Mobilgerät) hinterlegt sein. In der lokalen Datenbank ist eine Zeichenfolge hinterlegt, die aus mehreren dynamischen Zeichen besteht. Diese Zeichen sind in der lokalen Datenbank lokal veränderbar und demnach flexibel. In der zentralen Datenbank werden diese lokal dynamischen Zeichen jedoch statisch, d.h. in der zentralen Datenbank werden die Zeichen der letzten Authentifizierungsabfrage hinterlegt. Die lokale Datenbank "kennt" die in der zentralen Datenbank lokal veränderbaren Zeichen nicht. Daneben gibt es in der lokalen Datenbank lokal unveränderbare Zeichen, deren Gegenstück in der zentralen Datenbank hinterlegt ist. Dort sind sie jedoch bei einer Authentifizierungsabfrage als zentral veränderbare Zeichen zurücksetzbar oder veränderbar. Die lokale Datenbank kennt den letzten Status der in der zentralen Datenbank hinterlegten lokal unveränderbaren bzw. zentral veränderbaren Zeichen nicht. Würde der Schlüssel der Kommunikationseinrichtung beispielsweise gestohlen und für einen Authentifizierungsversuch eingesetzt werden, so würde sich sofort der Status der in der zentralen Datenbank hinterlegten lokal unveränderbaren bzw. zentral veränderbaren Zeichen und somit der zentrale Schlüssel ändern. Eine nichtberechtigte Benutzung würde bei der nächsten Abfrage durch die originale Datenbank festgestellt werden. Über eine Vor-Authentifizierung lässt sich eine widerrechtliche Authentifizierungsanfrage zudem schnell erkennen, indem diese parallele dynamische Änderungen auf beiden Datenbanken bewirkt, die eine Fälschung nicht vorhersehen kann.

Ein Abgleich der Daten der lokalen Datenbank und der zentralen Datenbank erfolgt in der Regel zum Authentifizierungszeitpunkt. Erst wenn die Vor-Authentifikation und/oder Authentifizierung und/oder die Identifizierung erfolgreich verlaufen sind, erfolgt eine Aktualisierung der statischen Zeichen.

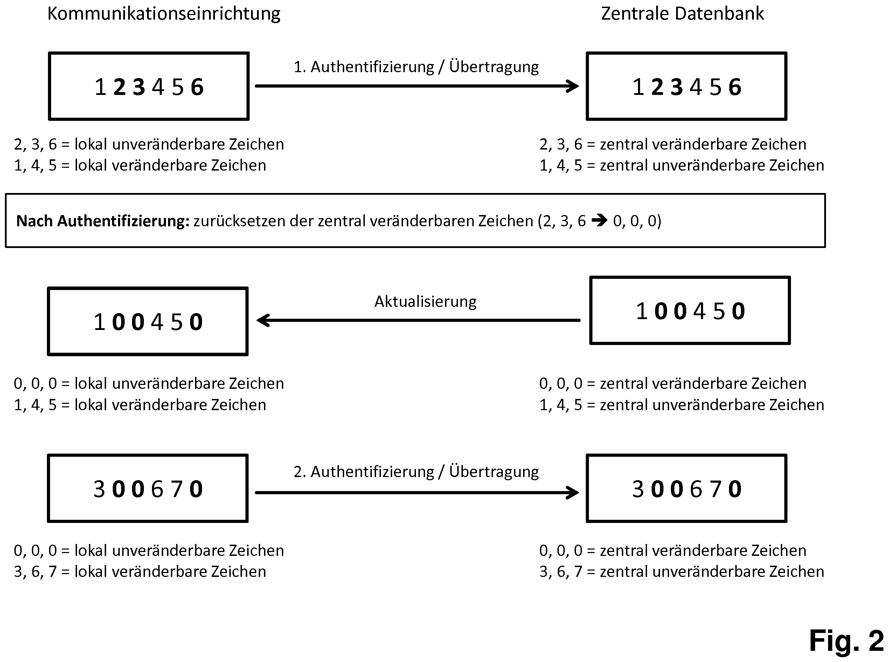

In Fig. 2 ist ein Beispiel des erfindungsgemäßen Verfahrens gezeigt. Eine Kommunikationseinrichtung enthält einen Schlüssel in Form einer Zeichenfolge bestehend aus den Zahlen 1, 2, 3, 4, 5, 6. Die in Fettschrift hervorgehobenen Zahlen der Kommunikationseinrichtung 2, 3, 6 entsprechen den lokal unveränderbaren Zeichen, während die Zahlen 1, 4, 5 den lokal veränderbaren Zeichen entsprechen. Die lokal veränderbaren Zeichen würden sich entsprechend der in der Kommunikationseinrichtung festgelegten Regeln oder Anweisungen laufend in dynamischer Weise verändern, während die lokal unveränderbaren Zeichen statisch bleiben. Zum Authentifizierungszeitpunkt (erste Authentifizierung) wird der Schlüssel zur zentralen Datenbank übertragen und mit dem dort hinterlegten Schlüssel verglichen. In der zentralen Datenbank ist ebenfalls eine Zeichenfolge bestehend aus den Zahlen 1, 2, 3, 4, 5, 6 hinterlegt. Dabei sind die Ziffern 2, 3, 6 zentral veränderbar, während die Ziffern 1, 4, 5 zentral unveränderbar sind.

Bei oder nach der Authentifizierung werden die zentral veränderbaren Zeichen entweder belassen, oder wie in diesem Beispiel gezeigt, zurückgesetzt. Die zentral veränderbaren Zeichen 2, 3, 6 werden also hier zurückgesetzt bzw. neu gewählt. Als Beispiel werden die Zahlenwerte 2, 3, 6 beispielsweise durch die Ziffer 0 ersetzt, so dass die neu entstandene Zahlenfolge 1, 0, 0, 4, 5, 0 heißt. Diese wird als lokal unveränderbare Zeichenfolge auf die Kommunikationseinrichtung übertragen und in dieser hinterlegt. Dabei würden sich die Ziffern 1, 4, 5 in der Kommunikationseinrichtung fortlaufend weiter dynamisch verändern, während die Ziffern 0, 0, 0 lokal unveränderbar bleiben. Zwischen den Authentifizierungszeitpunkten verändern sich somit die lokal veränderbaren Zeichen in der Kommunikationseinrichtung, d.h. aus den Ziffern 1, 4, 5 werden beispielsweise die Ziffern 3, 6, 7. Zum zweiten Authentifizierungszeitpunkt wird die gesamte Zahlenfolge erneut übertragen und mit der in der zentralen Datenbank hinterlegten Zeichenfolge des letzten Authentifizierungszeitpunktes verglichen. Für eine erfolgreiche Authentifizierung und/oder Identifizierung müssen sich die lokal veränderbaren Zeichen 1, 4, 5, die seit dem letzten Authentifizierungszeitpunkt in der zentralen Datenbank hinterlegt sind, verändert haben. Sind diese Zahlen nicht verändert, wäre die Authentifizierung fehlgeschlagen. Ferner wäre es für eine erfolgreiche Authentifizierung notwendig, dass die lokal unveränderbaren Zeichen 0, 0, 0 in der zentralen Datenbank einer Sicherheitskopie der zentral veränderbaren Zeichen 0, 0, 0 vor deren Veränderung entsprechen. Je nach Variante und Sicherheitsprofil kann auch nur oder zusätzlich eine teilweise Übereinstimmung bzw. Nichtübereinstimmung mit den zentral veränderbaren Zeichen erforderlich sein, d.h. der Abgleich kann unscharf durchgeführt werden. Sollte sich eines dieser Zeichen ebenfalls verändert haben, so könnte dies auf einen nichtberechtigten Authentifizierungsversuch hinweisen .Eine Veränderung könnte darauf hinweisen, dass die lokale Datenbank in Unkenntnis, welche Zahlen für sie unveränderbar sind, einige davon zufällig verändert hat, was jedoch unkritisch wäre und durch das Zurücksetzen wieder behoben würde.

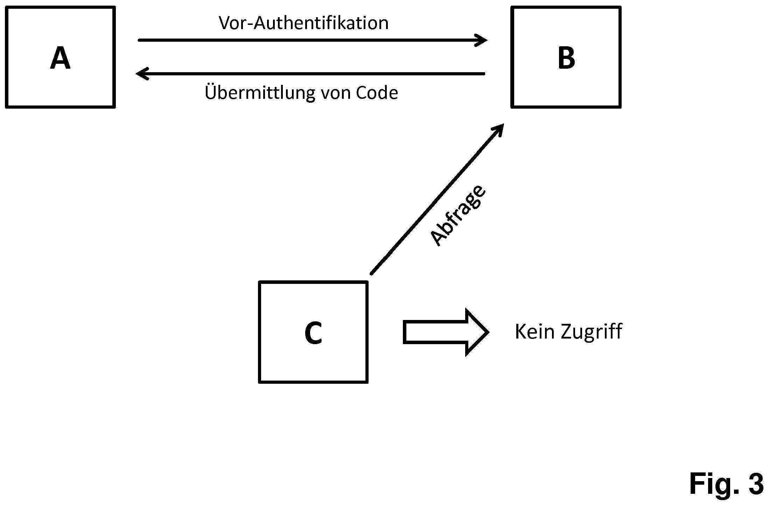

In Fig. 3 ist ein Beispiel einer Vor-Authentifikation zwischen zwei Nutzern A, C und einer zentralen Datenbank B gezeigt. Dabei bezeichnen A das Original, C eine widerrechtliche Kopie und B die zentrale Datenbank. Im Rahmen einer Vor-Authentifikation erfolgt eine Abfrage von C an B, wodurch ein Vor-Authentifikationsereignis zwischen A und B ausgelöst wird. Im Zuge der Vor-Authentifikation wird ein geänderter Code (Schlüssel) von der zentralen Datenbank B an den Nutzer A übermittelt. Dadurch erhält A einen durch B aktualisierten Schlüssel. Da sich der Schlüssel in C jedoch nicht geändert hat, erhält C keinen Zugriff bei der eigentlichen Authentifizierung auf B, denn dort liegt bereits der aktualisierte Schlüssel der Vor-Authentifikation.

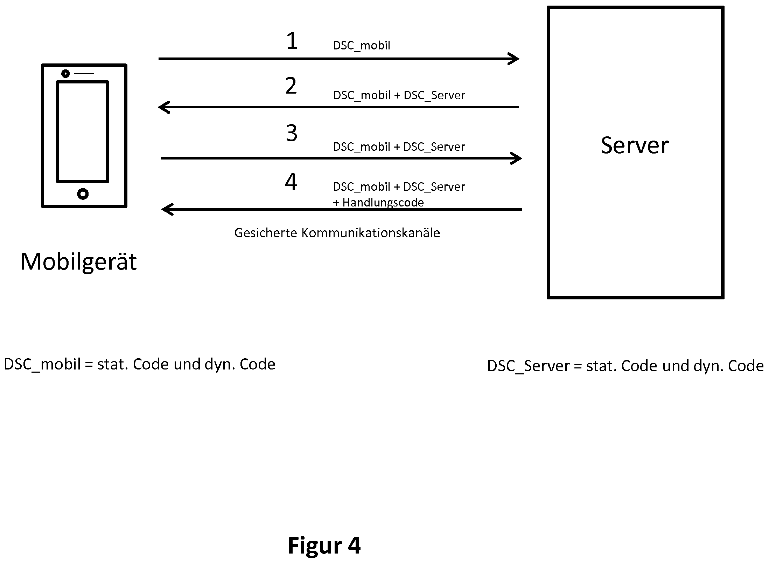

In Fig. 4 ist ein weiteres Beispiel des erfindungsgemäßen Verfahrens und deren Umsetzung in einem Kommunikationsnetzwerk gezeigt. In einem ersten Schritt erfolgt die Sendung eines dynamischen Sicherheitscodes, der aus lokal veränderbaren Zeichen und gegebenenfalls statischen Zeichen besteht, von einem Mobilgerät an einen Server. Der dynamische Teil des Codes kann beispielsweise abhängig sein von dem Batterieladezustand des Mobilgerätes. Die Ermittlung des Ladezustandes erfolgt durch eine Sensoreinrichtung. Die erhaltene Zustandsgröße dient als Basis für die Generierung des dynamischen Codes.

In einem zweiten Schritt wird ein Code vom Server an das Mobilgerät zurückgesendet, wobei der Sicherheitscode aus dem im Schritt 1 übermittelten Sicherheitscode des Mobilgerätes (DSC_Mobil) und einem vom Server generierten Code (DSC_Server) besteht. Der Servercode besteht ebenfalls aus dynamischen Zeichen und gegebenenfalls statischen Zeichen. Die statischen Zeichen können beispielsweise eine Identifikationsnummer zur Identifizierung des Gerätes oder der Person umfassen. Im dritten Schritt baut das Mobilgerät wieder eine Kommunikationsverbindung zu dem Server auf und übermittelt seinen eigenen Sicherheitscode (DSC_Mobil) und den gerade vom Server empfangenen Sicherheitscode (DSC_Server) an den Server. Im vierten Schritt vergleicht der Server die empfangenen Sicherheitscodes mit den im ersten Schritt empfangenen Sicherheitscodes. Im vierten Schritt sendet der Server einen Handlungscode zusammen mit den beiden Sicherheitscodes (DSC_Mobil und DSC_Server) zurück an das Mobilgerät. Dieses vergleicht die Sicherheitscodes mit denen im Schritt 2 empfangenen Sicherheitscodes. Der Handlungscode ist einer bestimmten Handlung zugordnet und erlaubt es dem Benutzer des Mobilgerätes eine Handlung vorzunehmen, beispielsweise die Vornahme einer Zahlung oder die Buchung eines Dienstes. Im Prinzip arbeitet dieses Verfahren wie ein "doppelter Handschlag", bei dem über unterschiedliche Kommunikationskanäle die dynamischen DSCs der Teilnehmer mehrmals übermittelt und verglichen werden, wobei jeder DSC eine veränderbare Komponente enthält, die entweder nur lokal oder nur zentral basierend auf einer ermittelten Messgröße (z.B. Temperatur, Luftdruck, GPS-Daten, Ladezustand der Batterie) veränderbar ist.

## Patentansprüche

1. Verfahren zur Authentifizierung und/oder Identifikation eines Gerätes, eines Dienstes, einer Person und/oder eines Geldmittels in einem Kommunikationsnetzwerk, bestehend aus einer Kommunikationseinrichtung und einer zentralen Datenbank, zwischen denen eine Authentifizierungsabfrage durchgeführt wird, umfassend die Schritte:
a. Bereitstellen eines ersten Schlüssels in der Kommunikationseinrichtung, der wenigstens eine Zeichenfolge umfasst, bestehend aus
- einzelnen oder mehreren lokal veränderbaren Zeichen, die sich in Abhängigkeit einer messbaren Größe oder eines von der messbaren Größe abhängigen Algorithmus, Regel und/oder Anweisung in der Kommunikationseinrichtung zwischen zwei Authentifizierungszeitpunkten dynamisch verändern,
- einzelnen oder mehreren lokal unveränderbaren Zeichen in dieser oder einer weiteren lokal hinterlegten Zeichenfolge, die zwischen zwei Authentifizierungszeitpunkten in der Kommunikationseinrichtung statisch bleiben,
b. Bereitstellen eines zweiten Schlüssels in der zentralen Datenbank, der eine Zeichenfolge umfasst, bestehend aus
- einzelnen oder mehreren zentral veränderbaren Zeichen in dieser oder einer weiteren Zeichenfolge, die den lokal unveränderbaren Zeichen oder der Zeichenfolge der Kommunikationseinrichtung des letzten Authentifizierungszeitpunktes entsprechen,
- einzelnen oder mehreren zentral unveränderbaren Zeichen, die den lokal veränderbaren Zeichen oder der Zeichenfolge der Kommunikationseinrichtung des letzten Authentifizierungszeitpunktes entsprechen,
c. Übertragen und Abgleich der in der zentralen Datenbank und der Kommunikationseinrichtung hinterlegten Schlüssel, wobei basierend auf beiden Schlüsseln eine positive Authentifizierung und/oder Identifikation des Gerätes, des Dienstes, der Person und/oder des Geldmittels beim Authentifizierungszeitpunkt dann erfolgt, wenn zumindest folgende Merkmale erfüllt sind:
i. zumindest teilweise Übereinstimmung der lokal unveränderbaren Zeichen oder Zeichenfolge im Schlüssel der Kommunikationseinrichtung mit den entsprechenden zentral veränderbaren Zeichen oder Zeichenfolge im Schlüssel der zentralen Datenbank, und
ii. zumindest teilweise fehlende Übereinstimmung der lokal veränderbaren Zeichen oder Zeichenfolge im Schlüssel der Kommunikationseinrichtung mit den entsprechenden zentral unveränderbaren Zeichen oder Zeichenfolge im letzten Schlüssel der zentralen Datenbank,
wobei die lokal veränderbaren Zeichen oder Zeichenfolge zwischen zwei Authentifizierungszeitpunkten nur in der Kommunikationseinrichtung, nicht jedoch in der zentralen Datenbank und die zentral veränderbaren Zeichen oder Zeichenfolge nur in der zentralen Datenbank, aber nicht in der Kommunikationseinrichtung veränderbar sind.

2. Verfahren nach Anspruch 1, **dadurch gekennzeichnet, dass** bei einer erfolgreichen Authentifizierung die zwischen zwei Authentifizierungszeitpunkten lokal unveränderbaren Zeichen oder Zeichenfolge im Schlüssel der zentralen Datenbank zurückgesetzt oder geändert und anschließend an die Kommunikationseinrichtung übertragen werden/wird, während die übermittelten lokal veränderbaren Zeichen oder Zeichenfolge der Kommunikationseinrichtung die entsprechenden zentral unveränderbaren Zeichen oder Zeichenfolge im Schlüssel der zentralen Datenbank ersetzen.

3. Verfahren nach Anspruch 1 oder 2, **dadurch gekennzeichnet, dass** der erste lokale Schlüssel in der Kommunikationseinrichtung und der zweite zentrale Schlüssel in der zentralen Datenbank eine weitere identitätsbestimmende Zeichenfolge umfasst, mit der das Gerät, der Dienst, die Person oder das Geldmittel eindeutig identifizierbar ist, wobei eine Identifizierung zum Authentifizierungszeitpunkt dadurch erfolgt, dass die in der Identitäts-Zeichenfolge der Kommunikationseinrichtung hinterlegte Identitäts-Zeichenfolge mit der in der zentralen Datenbank hinterlegten Identitäts-Zeichenfolge zumindest teilweise übereinstimmt.

4. Verfahren nach einem der Ansprüche 1 bis 3, **dadurch gekennzeichnet, dass** ein Teil der übermittelten veränderbaren Zeichen der Kommunikationseinrichtung zum Authentifizierungszeitpunkt in unveränderbare Zeichen der zentralen Datenbank umgewandelt werden, indem einzelne Zeichen oder eine Zeichenfolge in den Schlüssel der zentralen Datenbank integriert oder angehängt werden bzw. wird.

5. Verfahren nach einem der Ansprüche 1 bis 4, **dadurch gekennzeichnet, dass** die Veränderung in der lokal veränderbaren Zeichenfolge zeitgesteuert, impulsgesteuert, bewegungsabhängig, ortsabhängig, zeitabhängig, temperaturabhängig, erschütterungsabhängig, werteabhängig und/oder nach sonstigen dienstspezifischen Vorgaben erfolgt.

6. Verfahren nach einem der Ansprüche 1 bis 5, **dadurch gekennzeichnet, dass** die dynamisch veränderbaren Zeichen der Kommunikationseinrichtung Zeichen umfasst, die nur in der Kommunikationseinrichtung verwaltet werden und/oder Zeichen, die nur in der zentralen Datenbank verwaltet werden, wobei die zwischen zwei Authentifizierungszeitpunkten statischen Zeichen der Kommunikationseinrichtung und/oder der zentralen Datenbank bei einer Authentifizierungsabfrage entweder unverändert bleiben, zurückgesetzt oder von der zentralen Datenbank neu vergeben werden.

7. Verfahren nach einem der Ansprüche 1 bis 6, **dadurch gekennzeichnet, dass** in der Kommunikationseinrichtung zusätzlich ein Algorithmus, eine Regel und/oder eine Anweisung hinterlegt ist, die festlegt, ob und wie sich eine Zahlenfolge zwischen zwei Authentifizierungszeitpunkten fortlaufend verändert, wobei in der Zahlenfolge ein Wert, ein zwischen zwei Grenzwerten pendelnder Wert und/oder ansteigende oder absteigende Zahlenfolgen festgelegt oder verändert werden.

8. Verfahren nach einem der Ansprüche 1 bis 7, **dadurch gekennzeichnet, dass** die zentral veränderbare und an die Kommunikationseinrichtung übermittelte Zeichenfolge den letzten Authentifizierungszeitpunkt, den Wert eines Geldmittels, einen physikalischen Wert, eine Positionsangabe, ein Datum, einen Differenzwert, einen Zeitwert, eine Quersumme und/oder eine Prüfsumme umfasst.

9. Verfahren zur Authentifizierung und/oder Identifikation eines Gerätes, eines Dienstes, einer Person und/oder eines Geldmittels in einem Kommunikationsnetzwerk, bestehend aus einer Kommunikationseinrichtung und einer zentralen Datenbank, zwischen denen eine Authentifizierungsabfrage durchgeführt wird, umfassend die Schritte:
a. Bereitstellen eines ersten Schlüssels in der zentralen Datenbank, der wenigstens eine Zeichenfolge umfasst, bestehend aus
- einzelnen oder mehreren zentral veränderbaren Zeichen, die sich in Abhängigkeit einer messbaren Größe oder eines von der messbaren Größe abhängigen Algorithmus, Regel und/oder Anweisung in der Kommunikationseinrichtung zwischen zwei Authentifizierungszeitpunkten dynamisch verändern,
- einzelnen oder mehreren zentral unveränderbaren Zeichen in dieser oder einer weiteren zentral hinterlegten Zeichenfolge, die zwischen zwei Authentifizierungszeitpunkten in der zentralen Datenbank statisch bleiben,
b. Bereitstellen eines zweiten Schlüssels in der Kommunikationseinrichtung, der eine Zeichenfolge umfasst, bestehend aus
- einzelnen oder mehreren lokal veränderbaren Zeichen in dieser oder einer weiteren Zeichenfolge, die den zentral unveränderbaren Zeichen oder der Zeichenfolge der zentralen Datenbank des letzten Authentifizierungszeitpunktes entsprechen,
- einzelnen oder mehreren lokal unveränderbaren Zeichen, die den zentral veränderbaren Zeichen oder der Zeichenfolge der zentralen Datenbank des letzten Authentifizierungszeitpunktes entsprechen,
c. Übertragen und Abgleich der in der zentralen Datenbank und der Kommunikationseinrichtung hinterlegten Schlüssel, wobei basierend auf beiden Schlüsseln eine positive Authentifizierung und/oder Identifikation des Gerätes, des Dienstes, der Person und/oder des Geldmittels beim Authentifizierungszeitpunkt dann erfolgt, wenn zumindest folgende Merkmale erfüllt sind:
i. zumindest teilweise Übereinstimmung der zentral unveränderbaren Zeichen oder Zeichenfolge im Schlüssel der zentralen Datenbank mit den entsprechenden lokal veränderbaren Zeichen oder Zeichenfolge im Schlüssel der Kommunikationseinrichtung, und
ii. zumindest teilweise fehlende Übereinstimmung der zentral veränderbaren Zeichen oder Zeichenfolge im Schlüssel der zentralen Datenbank mit den entsprechenden lokal unveränderbaren Zeichen oder Zeichenfolge im letzten Schlüssel der Kommunikationseinrichtung,
wobei die zentral veränderbaren Zeichen oder Zeichenfolge zwischen zwei Authentifizierungszeitpunkten nur in der zentralen Datenbank, nicht jedoch in der Kommunikationseinrichtung und die lokal veränderbaren Zeichen oder Zeichenfolge nur in der Kommunikationseinrichtung, aber nicht in der zentralen Datenbank veränderbar sind.

10. Verfahren nach einem der Ansprüche 1 oder 9, **dadurch gekennzeichnet, dass** vor der Authentifizierungsabfrage eine Vor-Authentifizierung durchgeführt wird, die von der jeweiligen Partner-Datenbank ausgelöst wird und zu einer Veränderung der dynamischen Zeichenfolge führt.

11. Verfahren zur Authentifizierung und/oder Identifikation eines Gerätes, eines Dienstes, einer Person und/oder eines Geldmittels in einem Kommunikationsnetzwerk, bestehend aus einer ersten Kommunikationseinrichtung und einer weiteren Kommunikationseinrichtung, wie einem zentralen Server, zwischen denen eine Authentifizierungsabfrage durchgeführt wird, umfassend die Schritte:
a. Bereitstellen eines ersten Schlüssels von der Kommunikationseinrichtung, der wenigstens eine Zeichenfolge umfasst, bestehend aus
- einzelnen oder mehreren lokal veränderbaren Zeichen, die sich in Abhängigkeit einer messbaren Größe oder eines von der messbaren Größe abhängigen Algorithmus, Regel und/oder Anweisung in der Kommunikationseinrichtung zwischen zwei Authentifizierungszeitpunkten dynamisch verändern,
b. Übermitteln des ersten Schlüssels der Kommunikationseinrichtung an den zentralen Server über einen Kommunikationskanal,
c. Bereitstellen eines zweiten Schlüssels von dem zentralen Server, wobei der Schlüssel eine Zeichenfolge umfasst, bestehend aus
- einzelnen oder mehreren zentral veränderbaren Zeichen, die sich in Abhängigkeit einer messbaren Größe oder eines von der messbaren Größe abhängigen Algorithmus, Regel und/oder Anweisung in der Kommunikationseinrichtung zwischen zwei Authentifizierungszeitpunkten dynamisch verändern,
d. Übermitteln des von dem zentralen Server empfangenen ersten Schlüssels der Kommunikationseinrichtung und dem zweiten Schlüssel des zentralen Servers über einen Kommunikationskanal an die Kommunikationseinrichtung,
e. Überprüfen, ob der von dem zentralen Server erhaltene erste Schlüssel der Kommunikationseinrichtung mit dem in Schritt b. übertragenen Schlüssel übereinstimmt,
f. Wenn positiv, Übermitteln des von dem zentralen Server erhaltenen ersten Schlüssels der Kommunikationseinrichtung und des zweiten Schlüssels des zentralen Servers über einen Kommunikationskanal an den zentralen Server,
g. Überprüfen ob der erste Schlüssel der Kommunikationseinrichtung und der zweite zentrale Schlüssel des zentralen Servers mit dem in Schritt d. an die Kommunikationseinrichtung übermittelten Schlüssel übereinstimmt,
h. Wenn positiv, Übermitteln des ersten Schlüssels der Kommunikationseinrichtung und des zweiten Schlüssels des zentralen Servers über einen Kommunikationskanal an die Kommunikationseinrichtung zusammen mit einem Handlungscode zur Durchführung der Handlung.

12. Verfahren nach Anspruch 11, **dadurch gekennzeichnet, dass** es sich bei dem physikalischen Faktor zur Veränderung der dynamisch veränderbaren Zeichen in dem ersten Schlüssel der Kommunikationseinrichtung um den Energieladezustand der Kommunikationseinrichtung handelt.

13. Verfahren nach Anspruch 11, **dadurch gekennzeichnet, dass** der erste Schlüssel der Kommunikationseinrichtung zusätzlich einzelne oder mehrere lokal unveränderbare Zeichen in dieser oder einer weiteren lokal hinterlegten Zeichenfolge umfasst, die zwischen zwei Authentifizierungszeitpunkten in der Kommunikationseinrichtung statisch bleiben.

14. Verfahren nach Anspruch 13, **dadurch gekennzeichnet, dass** die statischen Zeichen in dem ersten und/oder dem zweiten Schlüssel eine Identifikationsnummer, ein Passwort oder einen zurechenbaren Code enthalten.

15. Verfahren nach Anspruch 11, **dadurch gekennzeichnet, dass** die dynamischen veränderbaren Zeichen in einem weiteren Schritt in statische Zeichen oder umgekehrt umgewandelt werden.

## Claims

1. Method for authenticating and/or identifying an apparatus, a service, a person and/or a financial resource in a communication network consisting of a communication device and a central database, between which an authentication query is performed, comprising the steps of:
a. providing a first key in the communication device that comprises at least one character string consisting of
- one or more locally changeable characters that dynamically change between two authentication times in the communication device depending on a measurable variable or an algorithm, rule and/or instruction that is dependent on the measurable variable,
- one or more locally unchangeable characters in said character string or a further locally stored character string that remain static between two authentication times in the communication device,
b. providing a second key in the central database that comprises a character string consisting of
- one or more centrally changeable characters in said character string or a further character string that correspond to the locally unchangeable characters or character string of the communication device of the last authentication time,
- one or more centrally unchangeable characters that correspond to the locally changeable characters or character string of the communication device of the last authentication time,
c. transmitting and comparing the keys stored in the central database and the communication device, wherein, on the basis of the two keys, a positive authentication and/or identification of the apparatus, the service, the person and/or the financial resource then takes place at the time of authentication if at least the following criteria are met:
i. the locally unchangeable characters or character string in the key of the communication device at least partially match the corresponding centrally changeable characters or character string in the key of the central database, and
ii. the locally changeable characters or character string in the key of the communication device at least partially mismatch with the corresponding centrally unchangeable characters or character string in the last key of the central database, wherein the locally changeable characters or character string can be changed between two authentication times only in the communication device, but not in the central database, and the centrally changeable characters or character string can be changed between two authentication times only in the central database, but not in the communication device.

2. Method according to claim 1, **characterised in that**, for a successful authentication, the characters or character string in the key of the central database that cannot change locally between two authentication times is/are reset or changed and then transmitted to the communication device, while the transmitted locally changeable characters or character string of the communication device replace the corresponding centrally unchangeable characters or character string in the key of the central database.

3. Method according to either claim 1 or claim 2, **characterised in that** the first local key in the communication device and the second central key in the central database comprise a further identity-determining character string by means of which the apparatus, the service, the person or the financial resource can be uniquely identified, an identification at the time of authentication taking place by the identity character string stored in the identity character string of the communication device at least partially matching the identity character string stored in the central database.

4. Method according to any of claims 1 to 3, **characterised in that** some of the transmitted changeable characters of the communication device are converted into unchangeable characters of the central database at the time of authentication by integrating or attaching single characters or a character string into or to the key of the central database.

5. Method according to any of claims 1 to 4, **characterised in that** the locally changeable character string is changed in a manner that is time-controlled, pulse-controlled, motion-dependent, location-dependent, time-dependent, temperature-dependent, vibration-dependent, value-dependent and/or dependent on other service-specific specifications.

6. Method according to any of claims 1 to 5, **characterised in that** the dynamically changeable characters of the communication device comprise characters that are managed only in the communication device and/or characters that are managed only in the central database, the characters of the communication device and/or the central database that are static between two authentication times remaining unchanged, being reset or being reassigned by the central database during an authentication query.

7. Method according to any of claims 1 to 6, **characterised in that** an algorithm, a rule and/or an instruction is additionally stored in the communication device that determines whether and how a number sequence constantly changes between two authentication times, a value, a value oscillating between two limit values and/or increasing or decreasing number sequences being set or changed in the number sequence.

8. Method according to any of claims 1 to 7, **characterised in that** the centrally changeable character string that is transmitted to the communication device comprises the last authentication time, the value of a financial resource, a physical value, a position indication, a date, a difference value, a time value, a cross sum and/or a checksum.

9. Method for authenticating and/or identifying an apparatus, a service, a person and/or a financial resource in a communication network consisting of a communication device and a central database, between which an authentication query is performed, comprising the steps of:
a. providing a first key in the central database that comprises at least one character string consisting of
- one or more centrally changeable characters that dynamically change between two authentication times in the communication device depending on a measurable variable or an algorithm, rule and/or instruction that is dependent on the measurable variable,
- one or more centrally unchangeable characters in said character string or a further centrally stored character string that remain static between two authentication times in the central database,
b. providing a second key in the communication device that comprises a character string consisting of
- one or more locally changeable characters in said character string or a further character string that correspond to the centrally unchangeable characters or character string of the central database of the last authentication time,
- one or more locally unchangeable characters that correspond to the centrally changeable characters or character string of the central database of the last authentication time,
c. transmitting and comparing the keys stored in the central database and the communication device, wherein, on the basis of the two keys, a positive authentication and/or identification of the apparatus, the service, the person and/or the financial resource then takes place at the time of authentication if at least the following criteria are met:
i. the centrally unchangeable characters or character string in the key of the central database at least partially match the corresponding locally changeable characters or character string in the key of the communication device, and
ii. the centrally changeable characters or character string in the key of the central database at least partially mismatch with the corresponding locally unchangeable characters or character string in the last key of the communication device, wherein the centrally changeable characters or character string can be changed between two authentication times only in the central database, but not in the communication device, and the locally changeable characters or character string can be changed between two authentication times only in the communication device, but not in the central database.

10. Method according to either claim 1 or claim 9, **characterised in that** pre-authentication is performed prior to the authentication query, which pre-authentication is triggered by the relevant partner database and leads to a change in the dynamic character string.

11. Method for authenticating and/or identifying an apparatus, a service, a person and/or a financial resource in a communication network consisting of a first communication device and a further communication device, such as a central server, between which an authentication query is performed, comprising the steps of:
a. providing a first key from the communication device that comprises at least one character string consisting of
- one or more locally changeable characters that dynamically change between two authentication times in the communication device depending on a measurable variable or an algorithm, rule and/or instruction that is dependent on the measurable variable,
b. transmitting the first key of the communication device to the central server via a communication channel,
c. providing a second key from the central server, wherein the key comprises a character string consisting of
- one or more centrally changeable characters that dynamically change between two authentication times in the communication device depending on a measurable variable or an algorithm, rule and/or instruction that is dependent on the measurable variable,
d. transmitting the first key of the communication device received by the central server and the second key of the central server to the communication device via a communication channel,
e. checking whether the first key of the communication device obtained by the central server matches the key transmitted in step b.,
f. if positive, transmitting the first key of the communication device obtained by the central server and the second key of the central server to the central server via a communication channel,
g. checking whether the first key of the communication device and the second central key of the central server matches the key transmitted to the communication device in step d.,
h. if positive, transmitting the first key of the communication device and the second key of the central server to the communication device via a communication channel together with an action code for performing the action.

12. Method according to claim 11, **characterised in that** the physical factor for changing the dynamically changeable characters in the first key of the communication device is the level of energy charge of the communication device.

13. Method according to claim 11, **characterised in that** the first key of the communication device additionally comprises one or more locally unchangeable characters in said character string or a further locally stored character string that remain static between two authentication times in the communication device.

14. Method according to claim 13, **characterised in that** the static characters in the first and/or the second key contain an identification number, a password or an attributable code.

15. Method according to claim 11, **characterised in that** the dynamic changeable characters are converted into static characters or vice versa in a further step.

## Revendications

1. Procédé d'authentification et/ou d'identification d'un appareil, d'un service, d'une personne et/ou d'un moyen financier dans un réseau de communication constitué d'un dispositif de communication et d'une base de données centrale entre lesquels est effectuée une requête d'authentification, comprenant les étapes suivantes :
a. fourniture d'une première clé dans le dispositif de communication qui comprend au moins une séquence de caractères constituée
- de caractères individuels ou multiples modifiables localement qui changent dynamiquement dans le dispositif de communication entre deux instants d'authentification en fonction d'une grandeur mesurable ou d'un algorithme, d'une règle et/ou d'une instruction dépendant(e) de la grandeur mesurable,
- de caractères individuels ou multiples non modifiables localement dans cette ou une autre séquence de caractères stockée localement qui restent statiques dans le dispositif de communication entre deux instants d'authentification,
b. fourniture d'une deuxième clé dans la base de données centrale qui comprend une séquence de caractères constituée
- de caractères individuels ou multiples modifiables centralement dans cette ou une autre séquence de caractères, qui correspondent aux caractères ou à la séquence de caractères non modifiables localement du dispositif de communication du dernier instant d'authentification,
- de caractères individuels ou multiples non modifiables centralement qui correspondent aux caractères ou à la séquence de caractères modifiables localement du dispositif de communication du dernier instant d'authentification,
c. transmission et comparaison des clés stockées dans la base de données centrale et dans le dispositif de communication, une authentification et/ou identification positive de l'appareil, du service, de la personne et/ou du moyen financier à l'instant d'authentification ayant lieu sur la base des deux clés si au moins les caractéristiques suivantes sont remplies :
i. les caractères ou la séquence de caractères non modifiables localement dans la clé du dispositif de communication coïncident au moins partiellement avec les caractères ou la séquence de caractères modifiables centralement correspondants dans la clé de la base de données centrale, et
ii. les caractères ou la séquence de caractères modifiables localement dans la clé du dispositif de communication coïncident au moins partiellement avec les caractères ou la séquence de caractères non modifiables centralement correspondants dans la dernière clé de la base de données centrale
les caractères ou la séquence de caractères modifiables localement pouvant être modifiés entre deux instants d'authentification uniquement dans le dispositif de communication mais pas dans la base de données centrale et les caractères ou la séquence de caractères modifiables centralement pouvant être modifiés uniquement dans la base de données centrale mais pas dans le dispositif de communication.

2. Procédé selon la revendication 1, **caractérisé en ce qu'**en cas d'authentification réussie, les caractères ou la séquence de caractères non modifiables localement dans la clé de la base de données centrale entre deux instants d'authentification sont réinitialisés ou modifiés et ensuite transmis au dispositif de communication, tandis que les caractères ou la séquence de caractères modifiables localement transmis du dispositif de communication remplacent les caractères ou la séquence de caractères non modifiables centralement correspondants dans la clé de la base de données centrale.

3. Procédé selon la revendication 1 ou 2, **caractérisé en ce que** la première clé locale dans le dispositif de communication et la deuxième clé centrale dans la base de données centrale comprennent une autre séquence de caractères déterminant l'identité, avec laquelle l'appareil, le service, la personne ou le moyen financier peut être identifié(e) de manière unique, une identification à l'instant d'authentification ayant lieu par le fait que la séquence de caractères d'identité stockée dans la séquence de caractères d'identité du dispositif de communication coïncide au moins partiellement avec la séquence de caractères d'identité stockée dans la base de données centrale.

4. Procédé selon l'une des revendications 1 à 3, **caractérisé en ce qu'**une partie des caractères modifiables transmis du dispositif de communication est convertie à l'instant d'authentification en caractères non modifiables de la base de données centrale par intégration ou ajout de caractères individuels ou d'une séquence de caractères dans la clé de la base de données centrale.

5. Procédé selon l'une des revendications 1 à 4, **caractérisé en ce que** la modification dans la séquence de caractères modifiable localement s'effectue de manière commandée par le temps, commandée par impulsion, en fonction d'un mouvement, en fonction de l'emplacement, en fonction du temps, en fonction de la température, en fonction de vibrations, en fonction de valeurs et/ou selon d'autres prescriptions spécifiques au service.

6. Procédé selon l'une des revendications 1 à 5, **caractérisé en ce que** les caractères modifiables dynamiquement du dispositif de communication comprennent des caractères qui sont gérés uniquement dans le dispositif de communication et/ou des caractères qui sont gérés uniquement dans la base de données centrale, les caractères statiques entre deux instants d'authentification du dispositif de communication et/ou de la base de données centrale restant inchangés, étant réinitialisés ou étant réattribués par la base de données centrale lors d'une requête d'authentification.

7. Procédé selon l'une des revendications 1 à 6, **caractérisé en ce qu'**un algorithme, une règle et/ou une instruction qui définit si et comment une séquence de chiffres change continuellement entre deux instants d'authentification est en outre stockée dans le dispositif de communication, une valeur, une valeur oscillant entre deux valeurs limites et/ou des séquences de chiffres croissantes ou décroissantes étant définies ou modifiée dans la séquence de chiffres.

8. Procédé selon l'une des revendications 1 à 7, **caractérisé en ce que** la séquence de caractères modifiable centralement transmise au dispositif de communication comprend le dernier instant d'authentification, la valeur d'un moyen financier, une valeur physique, une indication de position, une date, une valeur de différence, une valeur de temps, une somme transversale et/ou une somme de contrôle.

9. Procédé d'authentification et/ou d'identification d'un appareil, d'un service, d'une personne et/ou d'un moyen financier dans un réseau de communication constitué d'un dispositif de communication et d'une base de données centrale entre lesquels est effectuée une requête d'authentification, comprenant les étapes suivantes :
a. fourniture d'une première clé dans la base de données centrale qui comprend au moins une séquence de caractères constituée
- de caractères individuels ou multiples modifiables centralement qui changent dynamiquement dans le dispositif de communication entre deux instants d'authentification en fonction d'une grandeur mesurable ou d'un algorithme, d'une règle et/ou d'une instruction dépendant(e) de la grandeur mesurable,
- de caractères individuels ou multiples non modifiables centralement dans cette ou une autre séquence de caractères stockée centralement qui restent statiques dans la base de données centrale entre deux instants d'authentification,
b. fourniture d'une deuxième clé dans le dispositif de communication qui comprend une séquence de caractères constituée
- de caractères individuels ou multiples modifiables localement dans cette ou une autre séquence de caractères, qui correspondent aux caractères ou à la séquence de caractères non modifiables centralement de la base de données centrale du dernier instant d'authentification,
- de caractères individuels ou multiples non modifiables localement qui correspondent aux caractères ou à la séquence de caractères modifiables centralement de la base de données centrale du dernier instant d'authentification,
c. transmission et comparaison des clés stockées dans la base de données centrale et dans le dispositif de communication, une authentification et/ou identification positive de l'appareil, du service, de la personne et/ou du moyen financier à l'instant d'authentification ayant lieu sur la base des deux clés si au moins les caractéristiques suivantes sont remplies :
i. les caractères ou la séquence de caractères non modifiables centralement dans la clé de la base de données centrale coïncident au moins partiellement avec les caractères ou la séquence de caractères modifiables localement correspondants dans la clé du dispositif de communication, et
ii. les caractères ou la séquence de caractères modifiables centralement dans la clé de la base de données centrale ne coïncident au moins partiellement pas avec les caractères ou la séquence de caractères non modifiables localement correspondants dans la dernière clé du dispositif de communication,
les caractères ou la séquence de caractères modifiables centralement pouvant être modifiés entre deux instants d'authentification uniquement dans la base de données centrale mais pas dans le dispositif de communication et les caractères ou la séquence de caractères modifiables localement pouvant être modifiés uniquement dans le dispositif de communication mais pas dans la base de données centrale.

10. Procédé selon l'une des revendications 1 ou 9, **caractérisé en ce que**, avant la requête d'authentification, une pré-authentification est effectuée qui est déclenchée par la base de données partenaire respective et conduit à une modification de la séquence de caractères dynamique.

11. Procédé d'authentification et/ou d'identification d'un appareil, d'un service, d'une personne et/ou d'un moyen financier dans un réseau de communication constitué d'un premier dispositif de communication et d'un autre dispositif de communication, tel qu'un serveur central, entre lesquels est effectuée une requête d'authentification, comprenant les étapes suivantes :
a. fourniture d'une première clé par le dispositif de communication qui comprend au moins une séquence de caractères constituée
- de caractères individuels ou multiples modifiables localement qui changent dynamiquement dans le dispositif de communication entre deux instants d'authentification en fonction d'une grandeur mesurable ou d'un algorithme, d'une règle et/ou d'une instruction dépendant(e) de la grandeur mesurable,
b. transmission de la première clé du dispositif de communication au serveur central via un canal de communication,
c. fourniture d'une deuxième clé par le serveur central, la clé comprenant une séquence de caractères constituée
- de caractères individuels ou multiples modifiables centralement qui changent dynamiquement dans le dispositif de communication entre deux instants d'authentification en fonction d'une grandeur mesurable ou d'un algorithme, d'une règle et/ou d'une instruction dépendant(e) de la grandeur mesurable,
d. transmission de la première clé du dispositif de communication reçue du serveur central et de la deuxième clé du serveur central au dispositif de communication via un canal de communication,
e. vérification du fait que la première clé du dispositif de communication reçue du serveur central coïncide avec la clé transmise à l'étape b.,
f. si la vérification est positive, transmission de la première clé du dispositif de communication reçue du serveur central et de la deuxième clé du serveur central au serveur central via un canal de communication,
g. vérification du fait que la première clé du dispositif de communication et la deuxième clé centrale du serveur central coïncident avec la clé transmise au dispositif de communication à l'étape d.,
h. si la vérification est positive, transmission de la première clé du dispositif de communication et de la deuxième clé du serveur central via un canal de communication au dispositif de communication avec un code d'action pour exécuter l'action.

12. Procédé selon la revendication 11, **caractérisé en ce que** le facteur physique pour modifier les caractères modifiables dynamiquement dans la première clé du dispositif de communication est l'état de charge énergétique du dispositif de communication.

13. Procédé selon la revendication 11, **caractérisé en ce que** la première clé du dispositif de communication comprend en outre des caractères individuels ou multiples non modifiables localement dans cette ou une autre séquence de caractères stockée localement qui restent statiques dans le dispositif de communication entre deux instants d'authentification.

14. Procédé selon la revendication 13, **caractérisé en ce que** les caractères statiques dans la première et/ou la deuxième clé contiennent un numéro d'identification, un mot de passe ou un code attribuable.

15. Procédé selon la revendication 11, **caractérisé en ce que** les caractères modifiables dynamiquement sont convertis en caractères statiques ou inversement dans une étape supplémentaire.
